(19) Europäisches Patentamt / European Patent Office / Office européen des brevets

(11) **EP 4 237 612 B1**

(12) **EUROPEAN PATENT SPECIFICATION**

(45) Date of publication and mention
of the grant of the patent:
**21.05.2025 Bulletin 2025/21**

(21) Application number: **21815099.3**

(22) Date of filing: **29.10.2021**

(51) International Patent Classification (IPC):
***D04H 3/147*** *(2012.01)*

(52) Cooperative Patent Classification (CPC):
**D04H 3/147**

(86) International application number:
**PCT/CZ2021/050121**

(87) International publication number:
**WO 2022/089676 (05.05.2022 Gazette 2022/18)**

(54) **NONWOVEN FABRIC COMPRISING FILAMENTARY STRATA**

VLIESSTOFF MIT FILAMENTENSTRATA

TISSU NON-TISSÉ COMPRENANT DES STRATES FILAMENTAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.11.2020 CZ 20200591**

(43) Date of publication of application:
**06.09.2023 Bulletin 2023/36**

(73) Proprietors:
- **PFNonwovens Holding s.r.o.
  Hradcany
  11800 Praha (CZ)**
- **PFNonwovens Czech s.r.o.
  669 02 Znojmo (CZ)**
- **Reifenhäuser GmbH & Co. KG Maschinenfabrik
  53844 Troisdorf (DE)**

(72) Inventors:
- **KAUSCHKE, Michael
  83209 Prien am Chiemsee (DE)**
- **MECL, Zdenek
  67181 Novy Saldorf - Sedlesovice (CZ)**
- **POLASKOVA, Nikol
  73542 Terlicko (CZ)**
- **BOHL, Patrick
  53773 Hennef (DE)**
- **NOACK, Christine
  50968 Köln (DE)**
- **WAGNER, Tobias
  50823 Köln (DE)**

(74) Representative: **Zemanová, Veronika
Kania, Sedlak, Smola
Patent Attorneys
Mendlovo namesti 1 a
603 00 Brno (CZ)**

(56) References cited:
**WO-A1-2018/059610    WO-A1-2020/103964**

## Description

### Field of invention

The invention relates to nonwoven fabrics containing filamentary strata.

### Background of the invention

Nonwoven fabrics used in various fields must meet various requirements based on their intended area of use. The key properties for example in the fields of disposable hygiene articles, disposable cleaning articles, medical applications, etc. include softness, high loft and good recovery.

Carded materials are and have been used for many such applications. However, the production of nonwovens from carded fibers is complicated and the bonding of fibers within such nonwovens results either in a significantly reduced loft and softness, or leads to insufficiently bonded fibers and inferior quality of the nonwoven, namely poor abrasion resistance.

Air-through bonded spunlaid technology is a viable solution for the industry's requirements, overcoming some of the disadvantages of carded materials primarily thanks to the greater length of the fibers. Different approaches are known in the industry.

For example, the required bulkiness and softness can be achieved, as disclosed in patent application WO2018059610 that describes the utilisation of crimped filaments with a so-called crimpable cross-section (e.g. eccentric core/sheath) or as disclosed, for example, in PFNonwovens patent application WO2020103964 that describes the utilisation of filaments with a non-crimpable cross-section (for example concentric core-sheath).

Nonwovens having good abrasion resistance as expressed by the Martindale Abrasion Test are described, for example, in WO2020112705.

WO2020107421 discloses a method of air-through bonding of nonwovens, which aims to produce a soft and lofty fabric. A web of continuous fibers is guided between a porous rotating member and a porous belt, while heated air flows through the web first from one side and then from the other. However, the description of this method is very vague and does not provide any data regarding the resulting products.

The ideal fabric for the industry is a nonwoven that fulfills both requirements, i.e. provides soft-bulkiness (well compressible, drapable, bendable, not stiff, pleasant to touch, etc.) and 3D stability (abrasion resistance, fuzz resistance, etc.). It is obvious that softness and 3D stability are not simple values that can be easily measured, quantified and compared, but instead present complicated characteristics that cover various fabric properties and, in fact, also various fabrics under the one term. Many patents or applications can be found that claim fabrics with softness, bulkiness (high thickness with low basis weight) and some resistance. A person skilled in the art can easily recognise that many of these patents or applications understand under the terms "soft" or "resistance" very different things. For example, the above mentioned application WO2020103964 understands soft as "soft-loft" and defines fabric softness based on a special coefficient. Conversely, the also abovementioned WO2020112705 defines softness based on a compression resiliency test. Even though both fabrics are defined as soft, their behaviour and end-user feeling can be substantially different and it is not easy to compare them to one another.

It is the aim of the invention to provide a nonwoven fabric, which is soft and bulky, while not tending to be fuzzy when used.

### Summary of the invention

The aim is achieved with a nonwoven fabric, the nonwoven fabric comprising a plurality of filamentary strata as defined in claim 1.

Further embodiments of the invention are defined in the dependent claims.

### Definitions

The term **"filament"** is here defined essentially as an endless filament, whilst the term "staple fiber" relates a fiber that is cut to a defined length. The terms "fiber" and "filament" are herein used to confer the same meaning. In the event of a cut fiber, the term "staple fiber" is used exclusively.

The term "interfilamentary conjunction" refers to all the possible mutual interactions between individual filaments or individual parts of the filaments, i.e. bonded, partially-bonded or non-bonded contact, intersection, interconnection, parallel contact, etc. interfilamentary conjunction may form a filament-to-filament bond, but also can present two independent filaments touching each other without any limitation to their mutual movement.

The terms **"bonds between filaments" or "bonding points"** relate to the bonds that usually connect two filaments in a location where these filaments intersect each other or in a location where they come into contact or alternatively where they adjoin each other. By means of bonding points / consolidating bonds it is possible to connect more than two filaments or to connect two parts of the same filament. Thus the term "bonding point" here represents the connection of two or more fibers / filaments at the point of contact by the interconnection of their components exhibiting lower melting points. In the bonding point, the formed component of the filament with the higher melting point is in general less impacted than the formed component of the filament with the lower melting point. i.e. the sheath melts slightly while the core remains essentially unchanged. Conversely, the term "bonding impression" represents a surface upon which the boss of a calender roller has acted. A bonding impression has a defined area given by the size of the boss on the bonding roller and compared to the adjacent area typically has a smaller thickness. During the bonding process the area of the bonding impression is typically subjected to significant mechanical pressure, which together with temperature may affect the shape of all filament components within the area of the bonding impression.

The term **"mono-component filament" or "mono-component fiber"** relates to a filament formed from a single polymer or from a single polymer blend, whereby it is differentiated from a bi-component filament or multi-component filament.

The term **"multi-component fiber" or "multi-component filament"** designates a fiber or filament the cross-section of which incorporates more than one individual partial component, whilst each of these independent components in the cross-section consists of a different polymeric compound or a different blend of polymeric compounds. The term "multi-component fiber / multi-component filament" is thus a superior term, that includes, but is not limited to "bi-component fiber / bi-component filament". The different components of multi-component filaments are arranged essentially in clearly defined areas arranged along the cross-section of the filament and extend out continuously along the length of the filament. A multi-component filament may have a cross-section divided into several partial cross-sections consisting of various components of arbitrary shapes or arrangements, including, for example, in a coaxial arrangement of the partial components of the cross-section in an arbitrary mutual arrangement of partial components of the cross-section in the form of core and sheath, radial or so-called islands-in-the-sea, etc.

The terms **"two-component"** and **"bi-component"** used to describe filaments are herein used interchangeably.

The design of multi-component filaments has a determining impact on the crimpability of these filaments. A good way to recognise the design of a multi-component filament is to see and evaluate its cross-section which makes visible the position of different components of a filament. In the majority of cases, the different components are made out of different polymer formulations which are selected and characterized by e.g. different melting temperatures and/or different shrinkage properties after spinning, quenching ,drawing and final fiber solidification. Typically, rotational symmetric position of filament components in its cross section (e.g. concentric core/sheath) will result in non-crimped filaments, while asymmetric position of filament components (e.g. side by side, or eccentric Core/Sheath ) will become the differential, potential crimp force to achieve either self crimping and/or heat activated crimped filaments. To simplify the language in this application we use the terms "crimpable cross-section" and "non-crimpable cross-section" in place of "filaments showing a cross-section which is supporting the crimp " and "filaments showing a cross-section which doesn't support a crimp". The term "crimpable cross-section" herein refers to multicomponent fibers, where components with different shrinkage properties are arranged across the cross-section so, that either these filaments will self-crimp during the filament drawing and solidification or, when heated to or above an activation temperature and then slowly cooled down, the fibers crimp, which causes these fibers to follow the vectors of the shrink forces.

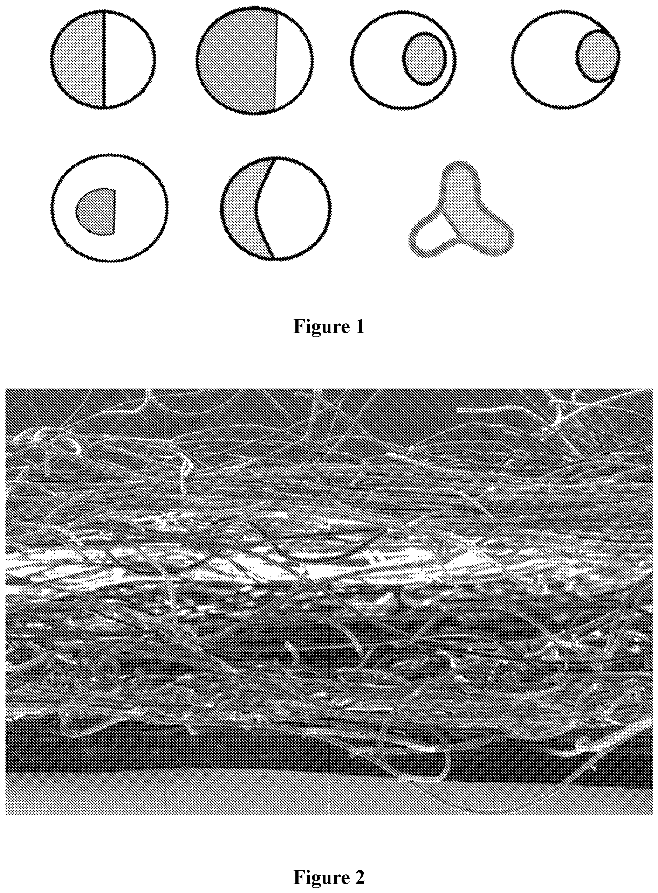

Thereby, when the fiber is released, it creates a so-called helical crimp, although when contained within a fiber layer the mutual adhesion of the fibers does not permit the creation of ideal helixes. For a multicomponent fiber, we can determine the center of mass for each individual component in the fiber cross-section (considering their areas/positions in the cross-section). Not to be bound by a theory, it is believed that when the centers of gravity of all areas of each of the components are substantially at the same point as described as rotationally symmetric concentric core/sheath , the fiber is "non-crimpable". For example, for a round bicomponent fiber with symmetric or centric core/sheath cross section structure the center of mass is in the center of the cross-section (see the Fig. 1).

The measurement **"filament diameter"** is expressed in units of $\mu$m. The terms "number of grams of filament per 9000 m" (also denier or den) or "number of grams of filament per 10000 m" (dTex) are used to express the degree of fineness or coarseness of a filament as they relate to the filament diameter (a circular filament cross-section is assumed) multiplied by the density of the material or materials used.

**"Machine direction"** (MD) - in relation to the production of nonwoven fibrous material and the actual nonwoven fibrous material itself, the term "machine direction" (MD) represents the direction that essentially corresponds to the forward motion direction of the nonwoven fibrous material on the production line on which this material is produced.

**"Cross direction"** (CD) - in relation to the production of nonwoven fibrous material and the actual nonwoven fibrous material itself, the term "cross direction" (CD) represents the direction that is essentially transversal to the forward motion direction of the nonwoven fibrous material on the production line on which this material is produced, whilst located on the plane of the nonwoven fibrous material.

"z-direction" - in relation to the production of nonwoven fibrous material is the vertical direction to the planar MD x CD. The extension in z-direction describes the thickness of the nonwoven material.

**"Nonwoven material" or "nonwoven fabric"** is a belt or fibrous formation produced from directionally or randomly oriented filaments that are first formed during the creation of a layer of filaments and then consolidated together by means of friction or elicitation of cohesive or adhesive forces and finally consolidated by the creation of mutual bonds, whilst this consolidation is accomplished thermally (e.g. by the effect of flowing air, calendering, effect of ultrasound, etc.), chemically (e.g. using an adhesive), mechanically (e.g. hydroentanglement, etc.), or alternatively by a combination of these methods. The term does not refer to fabrics formed by weaving or knitting or fabrics using yarns or fibers to form bonding stitches. The fibers may be of natural or synthetic origin and may be staple yarns, continuous fibers or fibers produced directly at the processing location. Commercially available fibers have a diameter ranging from less than approximately 0.001 mm to more than approximately 0.2 mm and are supplied in various forms: short fibers (known as staple or cut fibers), continuous individual fibers (filaments or mono-filament fibers), non-twisted bundles of filaments (combed fibers) and twisted bundles of filaments (yarns). A nonwoven fabric can be produced using many methods, including technologies such as meltblown, spunbond, spunmelt, spinning using solvents, electrostatic spinning, carding, film fibrillation, fibrillation, air-laying, dry-laying, wet-laying with staple fibers and various combinations of these processes as known in the art. The basis weight of nonwoven fabrics is usually expressed in grams per square metre (g/m2 or gsm).

The **"spunbond"** or "spunlaid" process is a nonwoven fabric production process, which includes a direct conversion of polymers to filaments, which is directly followed by the deposition of such created filaments, thereby creating a layer of nonwoven filaments containing randomly arranged filaments. This nonwoven layer of filaments is subsequently consolidated in such a way as to enclose the nonwoven fabric by the creation of bonds between the filaments. The consolidation process can be performed using various methods, for example by the effect of passing air, calendering, etc.

The term **"batt"** refers to materials in the form of filaments that are found in the state prior to bonding, a process that can be performed in various ways, for example, air-through-bonding, calendaring etc. The "batt" consists of individual filaments between which a fixed mutual bond is usually not yet formed even though the filaments may be pre-bonded / pre-consolidated in certain ways, where this pre-consolidation may occur during or shortly after the laying of the filaments in the spunlaying process. This pre-consolidation, however, still permits a substantial number of the filaments to be freely moveable such that they can be repositioned. The above mentioned "batt" may consist of several layers created by the deposition of filaments from several spinning beams in the spunlaying process.

In the sense used herein, the term **"layer"** relates to the partial component or element of a fabric. A "layer" may be in the form of multiple filaments produced on a single spinning beam or on two or more consecutively arranged spinning beams, which create essentially the same filaments. For example two consecutively arranged spinning beams intended for performing the spunbond procedure, have essentially the same settings and process polymers of essentially the same composition, can combine to produce a single layer. Conversely, two spunbond-type spinning beams of which one produces, for example, single-component filaments and the other produces, for example, bi-component filaments, will form two different layers. The composition of a layer can be ascertained on the basis of knowledge of the individual settings and components determining the resin (polymer) composition used for the creation of the layer or by means of analysis of the nonwoven fabric itself, for example, by using electron microscopy, or alternatively by analysis of the composition used in the production of the filaments contained in the layer using the DSC or NMR methods. Adjacent layers of filaments do not necessarily have to be strictly separated, the layers in the border region may blend in together as a result of the filaments of a later deposited layer falling into the gaps between the filaments of an earlier deposited layer. Layers may in nonwoven fabric form typical structure (e.g. SMS), that is independent from strata structure. One layer can contain one, two or even more strata.

The term **"stratum"** (pl. strata) as used herein relates to a filamentary region extending substantially along the plane of the MD and CD direction of the nonwoven fabric and having a certain thickness reaching in the z-direction of the fabric and having a substantially uniform density of filaments (i.e. mass of filaments per volume). The density of filaments of a stratum within a nonwoven fabric cannot be measured precisely, however, this may be assessed when viewed in the cross-section of the nonwoven fabric. The stratum may also be characterized by a substantially uniform density of filament-to-filament bonds and/or a substantially uniform content of stronger and weaker filament-to-filament bonds (although there may be a slight gradient of those values from the outer surface of an outer stratum towards the intermediate region. It is to be understood that a filamentary stratum within a nonwoven fabric as such, is never completely uniform; since filaments of a nonwoven fabric are randomly arranged and oriented, filaments from one stratum may enter into another stratum and, furthermore, certain areas of a stratum may bulge or extend locally out of the plane within which most of the stratum lies, parts of filaments of the stratum may reach into an adjacent stratum, or out of the surface of the nonwoven fabric. The strata structure can be observed by means of analysis of the nonwoven fabric itself, for example, by using electron microscopy (especially from the cross-section view), or by, for example, tomography or micro CT measurement.

The term **"compressibility"** here relates to the distance in millimetres by which a nonwoven fabric is compressed by the effect of a load defined during the measurement of "elasticity". The term **"recovery"** here relates to the ability of the fabric to recover its initial shape after being compressed. This concerns primarily the ability of regeneration (recovery) of bulkiness based on the ratio between the thickness of the fabric after release of the acting load and the initial thickness of this fabric.

The term "draw down ratio" or "draw ratio" herein refers to a number calculated by dividing the capillary cross-section area by the filament cross-section area. The measured fiber fineness based on its apparent diameter is used to calculate the filament cross-section area. Other non-round cross sections cannot be calculated in this way, thus in such cases the analysis of SEM images showing the actual cross-section is necessary.

**Brief description of the drawings**

Preferred embodiments of the invention will be further described in more detail with reference to the accompanying schematic drawings, photos and 3D models, which show

Fig. 1 examples of crimpable cross-section,
Fig. 2 SEM microscopy of a cross-section of an embodiment of the invention,
Fig. 3 schematic drawing of a cross-section of an embodiment of the invention,
Fig. 4 schematic drawing of a cross-section of another embodiment of the invention,
Fig. 5A schematic plan view of a no-bond type of interfilamentary conjunction,
Fig. 5B schematic cross-section of the interfilamentary conjuction of Fig. 5A
Fig. 6A schematic plan view of a weak bond type of interfilamentary conjunction,
Fig. 6B schematic cross-section of the interfilamentary conjuction of Fig. 6A
Fig. 7A schematic plan view of a full bond type of interfilamentary conjunction,
Fig. 7B schematic cross-section of the interfilamentary conjuction of Fig. 7A
Fig. 8A schematic plan view of a tree trunk type bond type of interfilamentary conjunction,
Fig. 8B schematic cross-section of the interfilamentary conjuction of Fig. 8A
Fig. 9 photo of a cross-section of an embodiment of the invention, when fixed in resin,
Fig. 10 SEM microscopy of a cross-section of an embodiment of the invention,
Fig. 11 schematic drawing of a cross-section of a fabric with very low filament-to-filament interconjunction density level and relatively large void volumes,
Fig. 12 schematic drawing of a cross-section of a fabric with a homogenous low filament-to-filament interconjunction density
Fig. 13 schematic drawing of a cross-section of a fabric with a homogenous higher filament-to-filament interconjunction density level with relatively smaller void volumes,
Fig. 14 schematic drawing of a cross-section of a fabric with a very high filament-to-filament interconjunction density level and small void volumes,
Figs. 15 to 19 show SEM microscopy of a nonwoven fabric according to the invention after delamination, wherein scars of broken bonds are visible,
Fig. 20A shows a SEM microscopy of a cross-section of an embodiment of the invention containing non-crimped filaments,
Figs. 20B shows a SEM microscopy of a cross-section of an embodiment of the invention containing non-crimped filaments,
Fig. 21 schematic drawing of a cross-section of yet another embodiment of the invention,
Fig. 22 SEM microscopy of a cross-section of an embodiment of the invention,
Fig. 23 schematic drawing of process line for producing the inventive nonwoven fabric,
Fig. 24 SEM microscopy of a cross-section of Example 1,
Fig. 25 SEM microscopy of a cross-section of Example 2,
Fig. 26 a photo of cross-section of Example 2 fixed in resin,
Fig. 27 3D model of X-ray tomography of Example 1,
Fig. 28 digital cut of the 3D model of Fig. 27,
Fig. 29 SEM microscopy of a cross-section of Example 3
Fig. 30 SEM microscopy of a cross-section of Example 4
Fig. 31 SEM microscopy of a cross-section of Example 5
Fig. 32 SEM microscopy of a cross-section of Example 6

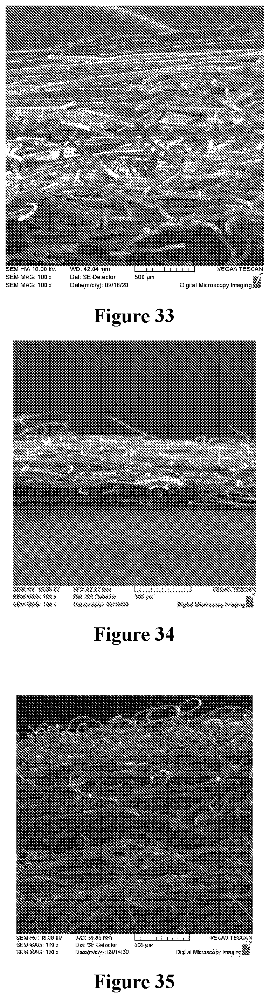

Fig. 33 SEM microscopy of a cross-section of Example 7
Fig. 34 SEM microscopy of a cross-section of Example 8
Fig. 35 SEM microscopy of a cross-section of Example 9

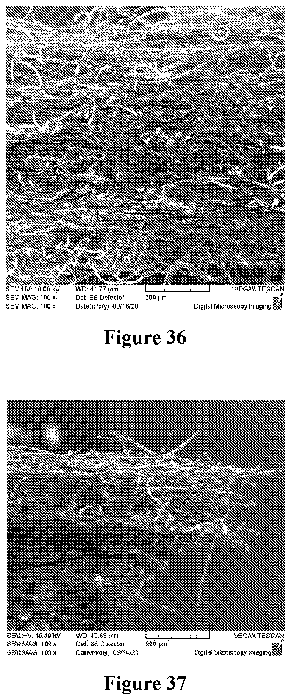

Fig. 37 SEM microscopy of a cross-section of Example 11
Fig. 38 a perspective view of equipment for the Martindale Average Abrasion Resistance Grade Test.
Fig. 39 a grade scale for fuzz assessment in the Martindale Average Abrasion Resistance Grade Test
Figs. 40 and 41 schematic view of delamination test

Figs. 42A and 42B photos of holder for sample for SEM microscopy
Figs. 43A to 43C photos of holder for 3D tomography
Figs. 44 to 46 3D models of microCT analysis of a sample according to the invention

## Detailed description

Spunbond and/or spunmelt nonwoven fabrics are well known in the industry. Endless filaments produced using a spinning beam are laid down on to a production belt to form a batt, then pre-consolidated and bonded together to form a fabric. The bonding step may be chosen from several known options, for example:

- mechanical entanglement performed, for example, by needles or streams of water;
- chemical bonding performed using adhesives or other additives added for bonding purposes;
- thermobonding performed by exposing the batt to heat to create bonding points by the melting and solidification of at least a part of the polymer composition. Heat can be provided, for example, by a pair of calender rolls, by radiant heat or a hot fluid passing through the batt.

Each of the listed methods, having specific advantages and disadvantages, also give the respective fabric a typical appearance and properties, that can be controlled using process settings within a given range. The list of examples provided above is for illustration purposes only and a person skilled in the art will appreciate that other bonding methods or various combinations thereof can be used to achieve the desired properties of the fabric.

Fabrics consolidated by hot fluid flow are known in the industry, in particular, carded technologies utilising short fibers are known to produce soft thermobonded fabrics. The main advantage of hot fluidd bonding is that this bonding takes place throughout the entire fabric, where each individual fiber-to-fiber intersection may form a bond. Bonds are small, formed between two or more fibers that are touching each other. Short fiber technology can utilise the advantage of mixing the fibers together into a homogenous fiber blend and to precisely control the amount of fibers containing a polymer with a lower melting temperature (bonding polymers). For example, when a very soft and lofty fabric is desired, only a small amount of fibers with a bonding polymer may be present in the fiber premix and vice-versa.

Conversely, a spunmelt nonwoven fabric is typically produced from one type of filament and the amount of bonding polymer can be controlled only by the content of the bonding polymer in each fiber (polymer ratio in bi-component filaments). Spunmelt production lines may contain multiple spinning beams and by the combination of various ratios from each beam, a layered fabric with a different bonding polymer can be produced. Layers with different bonding polymer ratios can provide different properties and fabrics can use the synergy between highly and moderately bonded layers. The ratio of a bonding polymer in a filament composition is used here as an example, more technical features can be combined together, as described, for example, in Reifenhauser's application EP3771556A1 from 2018, where a fabric from at least two layers is described, one providing great abrasion resistance and the other softness and bulkiness.

The above-mentioned solution provides a fabric with the desired combination of properties, but from a process point of view, it conceals one disadvantage for fabric producers. The best abrasion resistance and softness (in the sense of flexibility or drapability) are obtained, when the first layer forms only thin skin on the second layer, meaning that the first layer presents a lower basis weight and thus two-beam production lines cannot utilise the first beam to achieve its optimal throughput.

Our inventive solution presents a spunmelt material, where the "skin" on the "soft-bulk" part can be formed by setting the hot fluid flow bonding process, where the "skin's" thickness can be controlled according to the desired final properties of the fabric.

The fabric according to the invention can be produced from a batt containing multi-component filaments containing a bonding polymer with a lower melt temperature on at least a part of its surface. The batt on the moving belt is exposed to a heat treatment. Heat can be transferred into the batt by means of a hot fluid, for example hot air. Generally, heat can be transferred into the batt at different stages of the production process, for example, directly after the filaments are laid on the belt to pre-consolidate the structure, during a heat activation process, during the bonding process, etc.

Hot fluid penetrates through the surface of the filament batt, flows around the filaments and a part of the heat carried by the hot fluid is transferred into the colder filaments. As some heat is transferred to the filaments on the surface of the batt, the temperature of the hot fluid decreases somewhat as does the temperature difference between the filaments and the hot fluid. A person skilled in the art would acknowledge that when filaments at the surface acquire this heat, the temperature of the filament increases, whilst the temperature difference between the hot fluid and the filament declines. With sufficient time and heat, all the filaments within the fabric can be heated up to a uniform temperature and fiber-to-fiber bonding can be homogenous throughout the entire fabric thickness. The fabric can thus be called uniformly, fully or well bonded.

Surprisingly, it was found that a fabric with a non-uniform bonding point density throughout its thickness can bring extra advantage. The fabric according to the invention contains - when viewed in cross-section - areas with greater interfilamentary conjunction (more filaments touching each other so for example more filament-to-filament bonds can be formed and/or stronger bonds can be formed) and areas with lesser interfilamentary conjunction; where conjunction is defined as all the possible mutual interactions between individual filaments, i.e. bonded, partially-bonded or non-bonded contact, intersection, interconnection, parallel contact, etc. (defined in greater detail below). Such distinction of areas correlates for one type of filaments (based on fiber surface properties) with filamentary density (number of filaments within the given areas). Areas with a higher degree of bonding are typically formed on the outer surface of the filamentary batt where hot fluid enters the fabric. Areas (strata) of higher or lower filament density are generally well recognisable, nevertheless, typically there is no strict border between them. The fabric according to the invention contains in its thickness at least 2 different filamentary strata.

A stratum is generally defined as a 3D area oriented in the planar MD-CD direction with a generally uniform filament-to-filament bonding level and/or filamentary density. The formation of such strata can be influenced by various factors and a stratum may be recognised by several methods.

For example, a stratum with a higher interfilamentary conjunction level also has a higher **filamentary or fiber density.** Filaments are closer to each other than at the stratum formed from the same batt, but with a lesser fiber to fiber conjunctionality. The fiber density level can be estimated by looking at, for example, a SEM microscopy cross-section, as shown in Fig. 2, or it can be analysed and calculated from, for example, tomography or microCT measurements, where a 2-dimensional digital cross-cut can be created and used for exact determination of filamentary density.

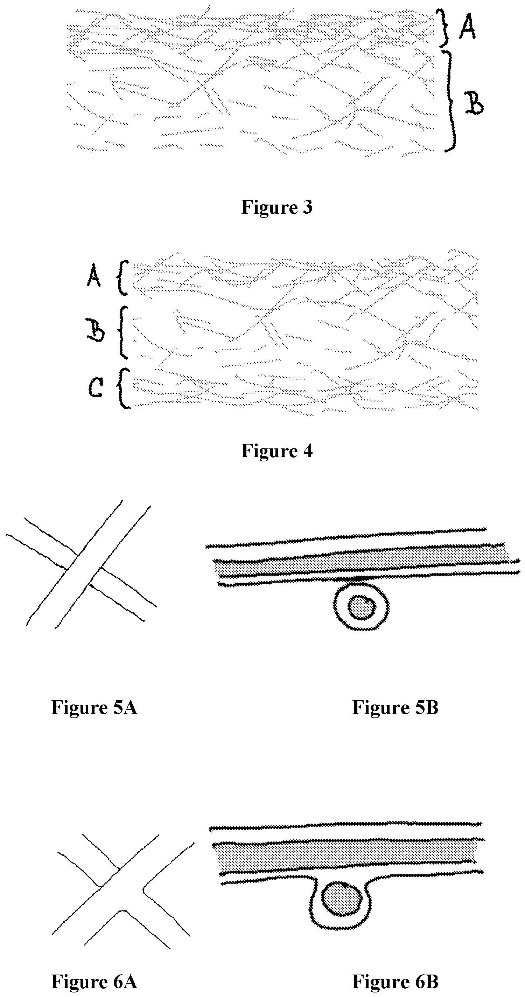

For example (see Fig.3), wherein a fabric according to the invention may comprise across its thickness at least 2 different filamentary strata (A, B) with different filamentary density. Preferably the ratio of filamentary density of stratum A and filamentary density of stratum B is at least 1.5; more preferably at least 2.0; more preferably at least 2.5; more preferably at least 3, even more preferably at least 5.

For example, a fabric according to the invention might comprise at least 2 different filamentary strata, wherein the first stratum (A) with a higher filamentary density forms one surface of the nonwoven and the second stratum (B) with a lower filamentary density forms an intermediate region or a second surface of the nonwoven.

For example (see Fig. 4), a fabric according to the invention may comprise at least 3 different strata, wherein there is a first stratum (A), which forms the first outer surface of the fabric, a second stratum (B), and a third stratum (C), which forms the second outer surface of the fabric, wherein the second stratum (B) is arranged between the first stratum (A) and the third stratum (C). The filamentary density of the second stratum (B) forming an intermediate region is lower than the filamentary density of the first stratum (A) and of the third stratum (C). It should be noted that outer strata (A, C) may, but do not need to have the same characteristics, provided they have a higher filamentary density than the (inner) second stratum (B). Preferably, the ratio of the filamentary density of the first stratum (A) and filamentary density of the second stratum (B) is at least 1.5; more preferably at least 2.0; more preferably at least 2.5; more preferably at least 3, even more preferably at least 5. Also preferably the ratio of the filamentary density of the third stratum (C) and filamentary density of the second stratum (B) is at least 1.5; more preferably at least 2.0; more preferably at least 2.5; more preferably at least 3, even more preferably at least 5.

For example, interfilamentary conjunction **density** can be measured directly. It can be estimated, for example, using optical or SEM microscopy. Both methods can be used only for analyses of fabric sample surfaces. For complete sample analyses, "Method to determine geometric fiber statistics for a nonwoven" is known in the industry, where a 3-dimensional microCT image is transformed into a model of the fabric. The method uses a machine-learning approach to identify the individual fibers present in the sample followed by a geometric analysis of these fibers to obtain statistics suitable for characterising the material. The results include the orientation and density distribution of the fibers. This analysis workflow was developed by Math2Market GmbH and is part of the GeoDict digital material laboratory.

For example, a fabric according to the invention may comprise in its thickness at least 2 different filamentary strata (A, B) with different interfilamentary conjunction density. The ratio of interfilamentary conjunction density of the first stratum (A) and interfilamentary conjunction density of the second stratum (B) is at least 2; more preferably at least 3; more preferably at least 4; more preferably at least 5, even more preferably at least 7.

For example, a fabric according to the invention might comprise at least 3 different strata, wherein there is a first stratum (A) forming the first outer surface of the nonwoven; a second stratum (B) and a third stratum (C) forming the second outer surface of the fabric, wherein the second stratum (B) is arranged between the first stratum (A) and the third stratum (C). The interfilamentary conjunction density of the first stratum (A) and of the third stratum (C) is higher than the interfilamentary conjunction density of stratum (B), which forms an intermediate region of the fabric. It should be noted that outer strata (A, C) may, but do not need to have the same characteristics, provided that both have a higher interfilamentary conjunction density than the (inner) third stratum (B) with the lowest interfilamentary conjunction density. Preferably the ratio of interfilamentary conjunction density of stratum (A) (or third stratum (C)) and interfilamentary conjunction density of stratum (B) is at least 2; more preferably at least 3.0; more preferably at least 4; more preferably at least 5, even more preferably at least 7.

Interfilamentary conjunction

Interfilamentary conjunction density correlates to bond density within the fabric, or in different words to the length of the parts of the filaments between the bond points. Here it should be noted that not every interfilamentary conjunction forms a bond and if so, different types of bonds can be found based on the filaments' composition and surrounding conditions. Not to be bound by a theory we believe that 4 typical cases can be named:

1) no bond - two filaments may touch each other but no bond is created (see Figs. 5A, 5B). For example, in the case of side/side fiber types, where bonding the polymer is present only on a part of the filament's surface, filaments may face each other by the part where no bonding polymer is available. Thus, filaments can touch each other but are not mutually connected or bonded. Also, for example, in the case where a fabric is bonded and later filament crimping is re-activated using a procedure where the melting temperature of the bonding polymer is not reached, the filaments can entangle and thereby create more filament-to-filament contact points, however, no new/additional filament-to-filament bonds are created.

2) weak or tangential bond - two filaments might touch each other "tangentially" and the bonding polymer creates a "neck" between them (see Figs. 6A, 6B). This can happen, for example, in the case of fibers only touching each other slightly or for example when there is only a lower amount of bonding polymer available.

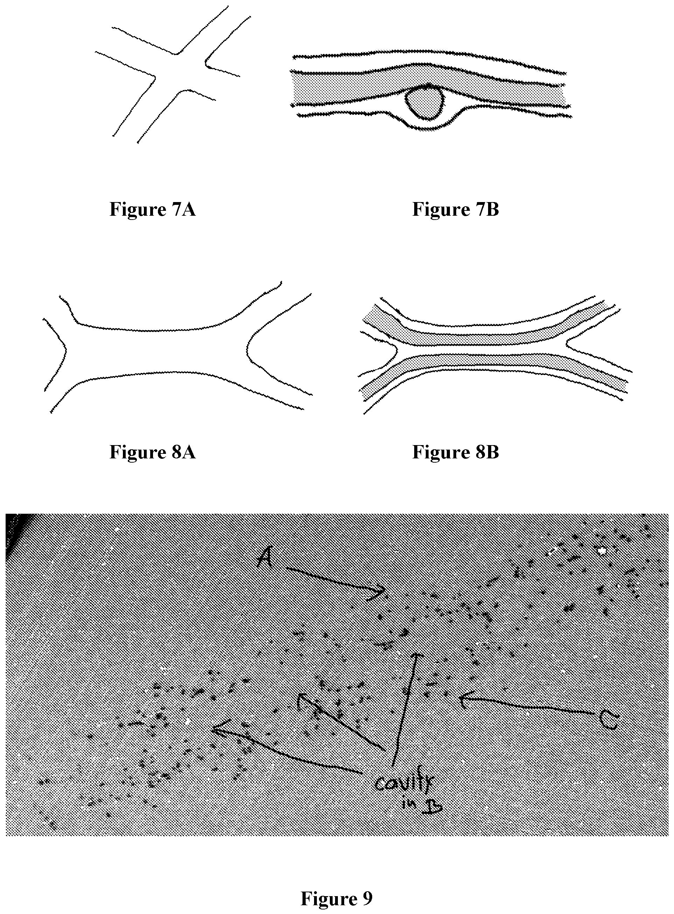

3) full bond - two filaments meet each other and the bonding polymer covers them by a combined sheath (see Figs. 7A, 7B). This can happen for example in the case where fibers are pressed against each other slightly or, for example, when there is a large amount of bonding polymer available to form the coat.

4) "tree trunk" - two filaments touch each other longitudinally and the bonding polymer creates a neck or combined coat for both fibers along a certain length, such as along a length, which is greater than the sum of the diameters of the two bonded filaments (see Figs. 8A, 8B).

It should be noted that more than 2 fibers can form a bond point and different bond point types can be combined together. For example, a tree trunk with a weak/tangential bond can be bonded to a third fiber, etc. It should also be noted that the presented categories are typical examples for explanatory purposes and in reality various types of bonds can be found in the fabric, especially transitory types of bonds between weak and full bonds and also tree trunks can be formed from very short to very long bonds.

For example, a stratum with a higher number of interfilamentary conjunction may have a higher density of bonds 3 (full bonds) and 4 (tree trunks) than a stratum with a lower number of interfilamentary conjunction.

For example, a fabric according to the invention may comprise across its thickness at least 2 different filamentary strata (A, B) with different levels of full and tree trunk type bond densities. Preferably, the ratio of full to tree trunk type bond densities in the first stratum (A) and the second stratum (B) is at least 1.5; more preferably at least 2.0; more preferably at least 3.0; more preferably at least 4.0, even more preferably at least 5.

For example, a fabric according to the invention may comprise at least 3 different strata, wherein there is a first stratum (A) forming the first outer surface of the nonwoven; a second stratum (B), and a third stratum (C) forming the second outer surface of the fabric, wherein the second stratum (B) is arranged between the first stratum (A) and the third stratum (C). The combined density of full bonds and tree trunk type bonds within the first stratum (A), as well as the combined density of full bonds and tree trunk type bonds within the third stratum (C) is higher than the combined density of full bonds and tree trunk type bonds within the second stratum (B). It should be noted that outer strata (A, B) may, but do not need to have the same characteristics, provided both have higher combined full bond and tree trunk type bond density than the (inner) second stratum (B). Preferably the ratio of combined full bond and tree trunk type bond density of the first stratum (A) (or third stratum (C)) and stratum (B) is at least 1.5; more preferably at least 2.0; more preferably at least 3.0; more preferably at least 4.0, even more preferably at least 5.0.

All four types of bonds may be found in one fabric sample. The strength of the bonds increases from the first option (no bonds) through to weak/tangential bonds to full bonds and tree trunk bonds. The number and ratio of different types of bonds in the fabric can influence final fabric properties. For example, a higher number of bonds with a higher strength can support fabric resistance and tensile strength, but also probably impart fabric stiffness. A higher number of tree trunk bonds especially in combination with a larger void volume can form to produce, for example, unwelcome inner hard spots that can be negatively rated as being rough or uncomfortable to wear.

For example, when viewed in cross-sections, a multiplicity of void volumes may be seen in a nonwoven fabric. Larger void volumes, called "cavities", may be visible in nonwoven web cross-sections and are 3-dimensional. Typically, the areas with a higher interfilamentary conjunction level have a smaller void volume among them and also the total void volume for the whole area is generally lower. Conversely, areas with fewer interfilamentary conjunction exhibit larger void volumes and also a larger total void volume for a given area. Large voids called cavities can also be observed in the cross-section of the fabric. In the cross-section along the longitudinal axis (MD) of the nonwoven, the length of the cavities is significantly greater than the height of the cavities.

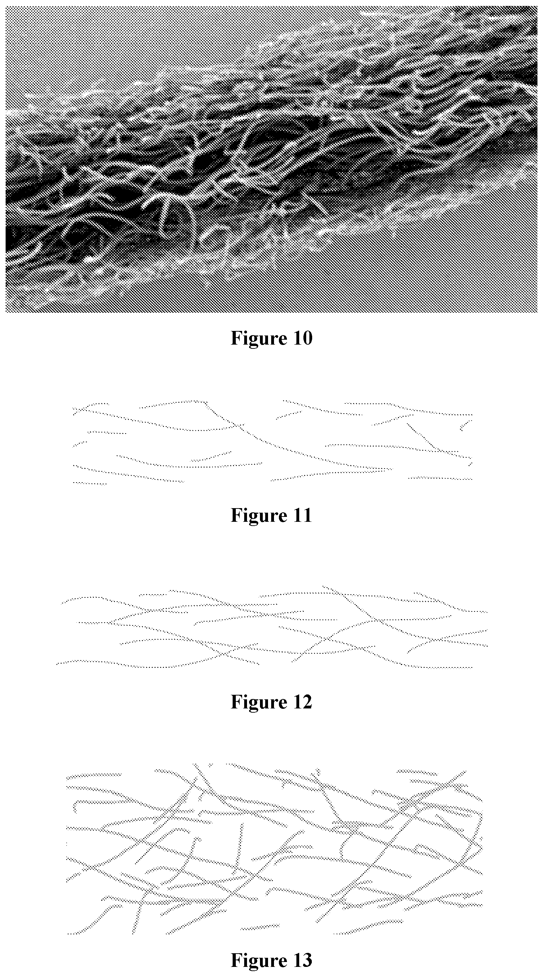

For example, the nonwoven fabric according to the invention may comprise a stratum B containing cavities, wherein the cavity length to height ratio, L:H, is at least 3:1, preferably 5:1 and most preferably 10:1. See e.g. Figs. 9 and 10.

The nonwoven fabric itself can be analysed using different types of microscopy or other visualisation techniques to describe the differences in its fibrous structure, but from the end user's point of view, fabric properties are the key advantage. Not to be bound by theory and assuming that the nonwoven fabric is produced from a uniform filamentary batt consisting of the same filaments, where the level of interfilamentary conjunction is proportional to the density of bonds, we can predict the final properties based on the interfilamentary conjunction density level.

For example, a single layer batt that is exposed to the spunbond air-through bonding process will be exposed to pre-consolidation on the belt, where hot fluid enters the fabric from the upper part, then the batt it is moved to the air-through-bonding unit and bonded on a belt or drum, where hot fluid enters the batt from the same side as the pre-consolidation air. Based on exact technology and process conditions, various structures with different properties can be formed:

When an insufficient amount of heat enters the batt filaments, bonding polymers are not sufficiently softened or melted, and any bonds that are formed are generally weak. The formed fabric typically provides a very low interfilamentary conjunction density level and relatively large void volumes. Such a fabric may be designated as "underbonded". Typically, it is easy to disintegrate the filaments or extract part of the filaments from it, and the resistance (both surface and delamination/disintegration) is very low. The fabric may be even considered unstable. On the other hand, such a fabric is probably very soft in the sense of compressibility, flexibility, drapability etc. See Fig. 11.

When the heat (possibly at the lower level of a suitable heat range) enters the batt filaments, especially when there is sufficient time for the heat to enter the filaments ubiquitously throughout the batt as homogeneously as possible or, for example, when the batt is so permeable to heat flow, that the heat flow passes through it with the same temperature gradient in all locations (person skilled in the art can easily determine the suitable process settings), bonding polymers soften or melt sufficiently (at the lower bounds of the suitable bonding range) and filament-to-filament bonds are created. The formed fabric typically provides a homogenous low interfilamentary conjunction density level with still relatively large void volumes. Such a fabric may be designated as "lower bonded". Typically, it is bulky (lofty), soft in the sense of compressibility, flexibility, drapability etc., but it retains a certain (lower) level of surface and delamination resistance. See Fig.12. When the heat enters the batt filaments and is distributed inhomogeneously so that more heat is accepted by the fibers at the outer area and less by the fibers inside the fabric (from the view of the entering heat flow direction), a strata structure may be formed.

Strata structure requires a higher interfilamentary conjunction density level on the outer surface and a lower interfilamentary conjunction density level inside the fabric. See Fig. 3. Heat can enter the filamentary batt from one side or from both sides at the same time (e.g. hot air flow from one side and a hot surface, e.g. belt, desk, drum etc; from the other side) or from both sides in separate steps (from one side and then from the other side). Under such circumstances, the first stratum (A) with a higher interfilamentary conjunction density level may be formed at first outer surface, a third stratum (C) with higher interfilamentary conjunction density level may be formed at the second outer surface and an intermediate region may be comprised of a second stratum (B) with the lowest interfilamentary conjunction density level. See Fig. 4.

Not to be bound by a theory we believe more process elements and parameters can work together to form a strata structure. For example, a slight compression force under heat (e.g. tension of the fabric on a cylindrical surface, as for example drum or roll) may support the outer strata formation with a higher interfilamentary conjunction density level. For example, heat entering the filaments might soften or partially soften the non-bonding polymer in the polymer composition and partial softening of the filaments closest to the heat source might help the outer strata formation. For example, filaments with a crimpable cross-section or containing a shrinkable polymer may under the heat try to move from a semi-stable to a more stable state and even if the process is not strong enough to form crimps, the inner filament force can support strata formation. Patent application WO2020103964 describes the theory of inner shrinkage force and fibers/filaments resistance thresholds to explain the formation of a bulky structure with a non-crimpable cross-section. Not to be bound by a theory, we believe that at the oven, a similar principle may be used to describe forces moving parts of filaments in the z-direction to form a strata structure. For example, cooling just after exiting the oven may help to form or at least to set the formed strata structure.

The fabric formed according to the invention that combines within its structure strata with higher and lower interfilamentary conjunction density levels, provides a very good combination of properties, where a good resistance (both surface resistance of strata with higher interfilamentary conjunction density level and a higher force needed for delamination given by the bond strength of the weakest stratum B with a low interfilamentary conjunction density level) combines with good bulkiness and softness (in the sense of compressibility, flexibility, drapability, etc.) supported by bulk strata with a lower interfilamentary conjunction density level.

Not to be bound by theory, we believe that the balance between softness/bulkiness and resistance/tensile strength properties can also utilise the synergy provided by a non-clear border between adjacent strata. For example, certain filaments can have some of their parts extending into the first or third stratum (A, C) that have a higher interfilamentary conjunction density level and other parts extending into the second stratum (B) where there is a lower interfilamentary conjunction density level. For example, a strata structure formed within one layer of a filamentary batt provides, compared to a similar structure formed from different fibrous layers, a better inner complexity. When the heat (possibly at the middle to higher levels of the suitable heat range) enters the batt filaments, especially when there is sufficient time for the heat to enter the filaments in all locations throughout the fabric as homogeneously as possible or, for example, when the batt is so permeable to heat flow that the heat flow passes through it with the same heat gradient across all locations (a person skilled in the art can easily determine more suitable process settings), bonding polymers soften or melt sufficiently (at the higher bounds of the suitable bonding temperature range) and filament-to-filament bonds are created. The formed fabric typically provides a homogenous higher interfilamentary conjunction density level with relatively smaller void volumes. Such a fabric may be designated as "fully bonded". Typically, it is less bulky and more stiff. Also it retains a higher level of surface resistance and especially delamination resistance. See Fig. 13.

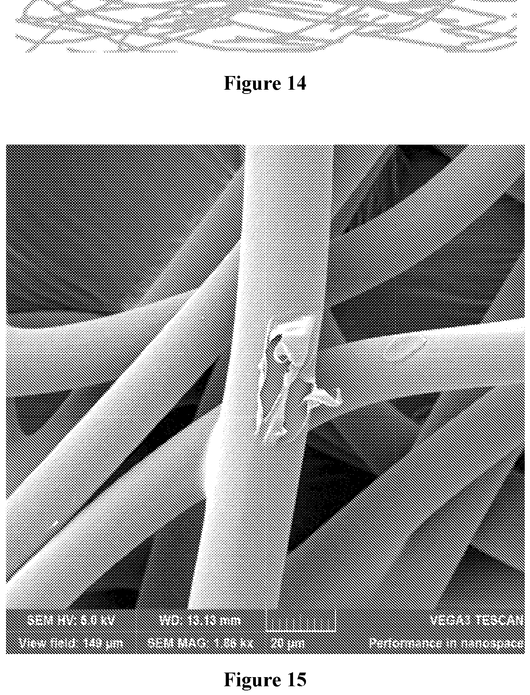

When too much heat enters the batt filaments, bonding polymers melt completely and predominantly full or tree trunk types of bonds are created. Also, other polymers from the filament composition may be influenced, for example, they may bend more easily and the filamentary batt may collapse into itself. The formed fabric typically provides a very high interfilamentary conjunction density level and small void volumes. Such a fabric may be designated as "overbonded". Typically, it is very stiff and resistant. It is also probably less bulky and has a worse softness feel. See Fig. 14.

It should be noted that the above described hypothesis where fabric thickness decreases with increasing heat absorption is valid for filaments that are not undergoing significant changes triggering inner forces changing filament shape (e.g. crimp activation, controlled shrinkage, etc.) during their bonding. Under such circumstances the fabric could have a different thickness to heat absorption curve with hill or hills on optimum crimp/shrink values and lower thickness for underbonded and overbonded fabric. The bonding principles are in general the same and a strata structure can be formed with all its advantages.

It is well known in the industry that certain combinations of polymers with different shrinkage levels arranged in a so-called crimpable cross-section provide for so-called crimping. This can be either immediate self-crimping or latent crimping, where the fibers have to be activated in order to exhibit crimps (for example, through thermal activation). Fibers with crimpable cross-sections provide regular crimps forming a so-called helical crimp. With considerable simplification, we can say that a fiber having a crimpable cross-section tends to bend in the direction towards the component with higher shrinkage, which causes a substantially uniform helical crimp. In other words, the crimpable cross-section causes the regular shifting of the inner force vectors of the first and second components towards each other. Not to be bound by the theory, we believe that the regularity of the shift is the main reason for the regularity of the crimp on the free single fiber. In contrast, according to our invention and not to be bound by a theory, on fibers that have a non-crimpable cross-section, we believe that the inner shrinkage force vectors of the first and second component do not provide any regular shift between each other, and thereby the fiber forms irregular bows or waves in arbitrary directions. With considerable simplification we can say that the fiber does not have a uniform tendency to bend towards a specific part of its cross-section or periphery, which results in its irregular final shape. After activation, the fiber cross-section remains substantially non-crimpable

For example, a fabric according to the invention may comprise multi-component filaments having a bonding polymer on at least a part of its surface. The bonding polymer can be chosen from a group of polyolefins (i.e. polypropylene or polyethylene), low-melting polymers including low-melting polyester grades (i.e. aliphatics such as polylactic acid, or aromatics such as polyethylene terephthalate), copolymers or blends of suitable polymers. It is within the scope of the invention that the bonding polymer consists or consists essentially of a plastic of the group of polyesters that also includes polyester copolymers (coPET) or polylactide copolymers (COPLA).

For example, a fabric according to the invention might comprise multi-component filaments having the first polymer with a melt temperature higher than the bonding polymer's melt temperature, preferably the melt temperature difference is at least 5°C. The first polymer can be chosen from a group of polyolefins (i.e. polypropylene or polyethylene), polyesters (i.e. aliphatics such as polylactic acid or aromatics such as polyethylene terephthalate), copolymers or blends of suitable polymers. It is within the scope of the invention that the first polymer consists or consists essentially of a plastic of the group of polyesters that also includes polyester copolymers (coPET) or polylactide copolymers (COPLA).

The preferred combinations of components for the bi-component filaments according to the invention are PP/PE, PET/PE, PET/PP, PET/CoPET, PLA/COPLA, PLA/PE and PLA/PP.

For example, the fabric according to the invention might comprise multi-component filaments, preferably bi-component filaments.

The fabric according to the invention is formed from a bulk batt. Preferably from a batt comprising crimped filaments or also filaments with latent crimp that can self crimp under proper activation.

For example, a fabric according to the invention might comprise multi-component filaments with a crimpable cross-section, preferably bi-component filaments with a crimpable cross-section, more preferably filaments with an eC/S or S/S cross-section. For example, some of the preferred combinations for an eC/S cross-section are: PP/PE, PET/PE, PLA/PE, PET/PP, PLA/PP, PP/coPP, PET/coPET, PLA/coPLA, wherein the named polymers form at least 75% of the filament component.

For example, a fabric according to the invention might comprise multi-component filaments with a non-crimpable cross-section comprising a shrinkable polymer, preferably a bi-component filament with a C/S cross-section comprising a polyester in its composition, preferably in the core. For example, some of the preferred combinations a for C/S cross-section are: PET/PE, PET/PP, PET/coPET, PLA/PE, PLA/PP, PLA/coPLA, wherein the named polymers form at least 75% of the filament component.

Not to be bound by the theory, we believe that in certain cases the strata structure can be formed, but due to the low amount of bonding polymer available on the filament's surface, the formed bonds are too weak to hold it in place and the desired structure ceases to exist. On the other hand, if the filaments contain too much bonding polymer that melts during the bonding process, the remaining solid parts of filaments that do not melt become too weak to retain their structure when subjected to heat flow and again the desired structure ceases to exist.

For example, the fabric according to the invention might comprise at least 15 weight% of the bonding polymer, preferably at least 18 weight% of the bonding polymer.

For example, the fabric according to the invention might comprise a maximum of 75 weight% of the bonding polymer, preferably of a maximum of 80 weight% of the bonding polymer.

Different levels can be used for various polymer combinations. For example, the fabric according to the invention with PP/PE filaments might comprise at least 25 weight% of the bonding polymer, preferably at least 30 weight% of the bonding polymer, more preferably at least 35 weight% of the bonding polymer. For example, the fabric according to the invention with PP/PE filaments might comprise a maximum of 75 weight% of the bonding polymer, preferably of a maximum of 70 weight% of the bonding polymer, more preferably of a maximum of 65 weight% of the bonding polymer.

It should be also noted that bonding polymer should be present on the filament surface. In the case of core sheath or eccentric core-sheath, the bonding polymer should be part of the sheath or preferably form the sheath.

For example, the fabric according to the invention might comprise a bonding polymer forming at least 20% of the area of the filament surface, preferably at least 35% of the area of the filament surface, even more preferably at least 50% of the area of the filament surface. The strata structure according to the invention provides a balance of fabric resistance and softness/bulkiness properties.

For example, fabric resistance is always required. The fabric needs to be resistant enough to undergo the conversion process to the final product without suffering damage and also to withstand the use of the final product. Two very important parts of resistance are fabric surface stability (resistance to releasing fibers from the surface) and fabric delamination stability (resistance to the tearing off of the upper part of fabric from the lower part). Often these two types of resistance are evaluated together with other types of resistance such as abrasion resistance using the Martin dale test method with a set number of cycles and subsequent human evaluation of the result on a scale from 1 to 5. This test is very good for setting a threshold level for one specific product with a binary pass/fail assessment, however, due to its rough scale and lack of additional information for the purpose of comparison of the samples that passed the test with the best result, it is not the best option for distinguishing in sufficient detail as required for the description of the advantages of our invention.

In other words, we can say that the fabric's tensile strength in the z-direction is lower for strata with a lesser interfilamentary conjunction level. A fabric's tensile strength in the z direction can be measured for example using a delamination strenght test. A fabric tears in its weakest stratum. When the delamination strength is too low, the fabric is not stable enough, and under the load of conversion or normal operation it can delaminate and tear into layers, or can delaminate only in certain areas where the delaminated part is still partially connected and tends to create unwelcome lumps. Similarly, even if the surface of the fabric is very resistant to abrasion, delamination may spoil the result with lumps or the so-called spider webbing effect during the Martindale abrasion test.

Not to be bound by theory, we believe that for the fabric with a formed strata structure the key value for describing resistance is the delamination strength. A fully bonded fabric with no or low level of strata structure will have good surface stability and a high delamination strength. A well-formed strata structure is characterised by good surface stability and a medium delamination strength. An underbonded fabric with a weak or no strata structure is characterised by easy surface disintegration and a low delamination/desintegration strength.

For example, the fabric according to the invention might comprise at least 2 different strata, wherein the delamination strength is equal or higher than 0.5 N or preferably higher than 0.6 N or preferably higher than 0.7 N or preferably higher than 0.8 N.

For example, the fabric according to the invention might comprise at least 2 different strata, wherein the delamination strength is equal to or lower than 2.0 N.

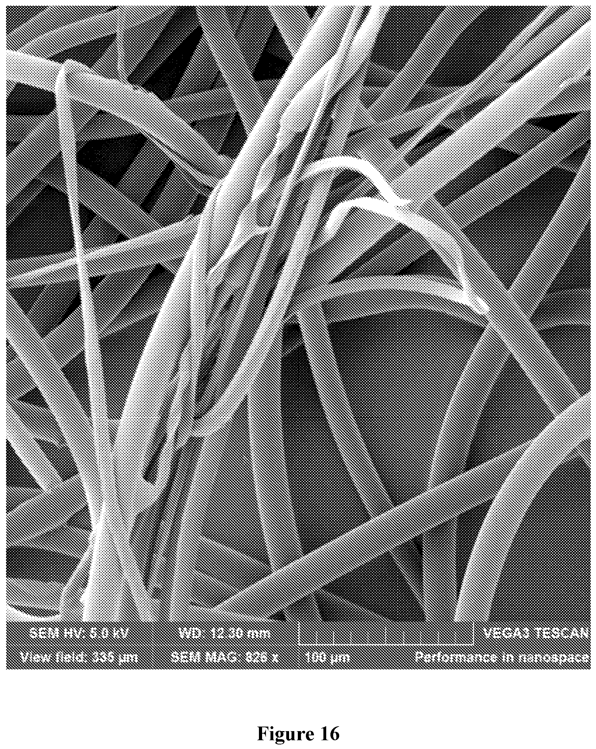

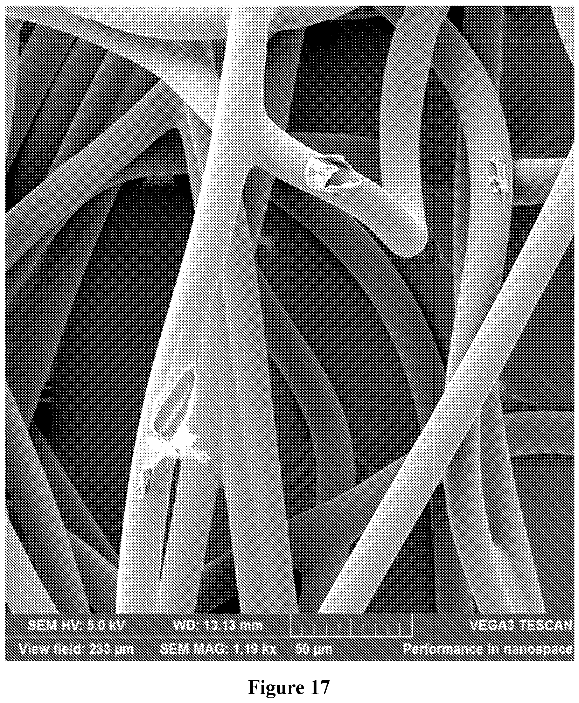

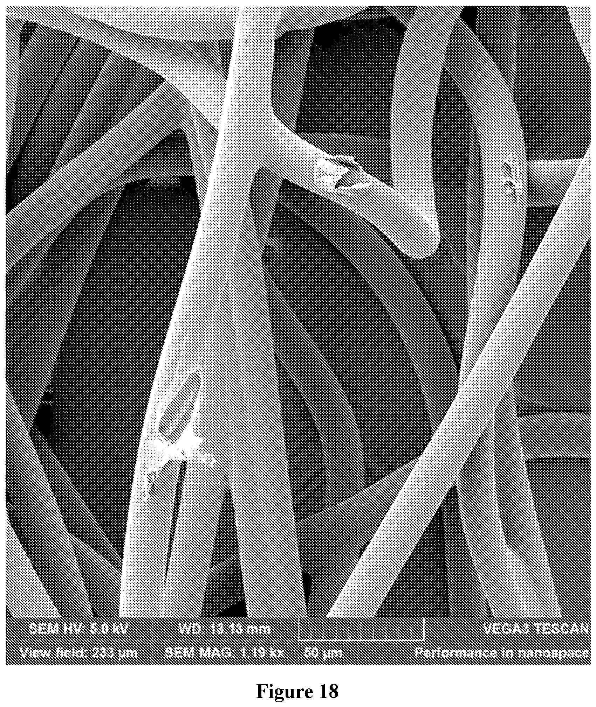

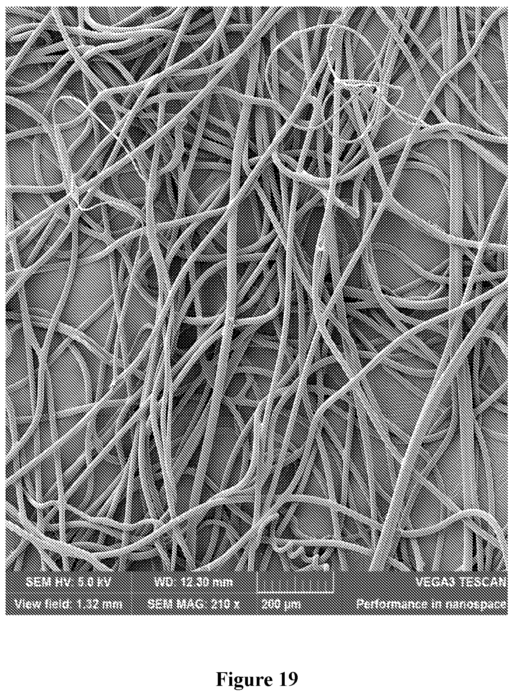

The delamination force is the force needed to pull apart the outer parts/outer strata of a nonwoven fabric along the weakest area within the nonwoven fabric. Providing that the fabric has a strata formed structure, delamination shall take place within the stratum with the lowest interfilamentary conjunction density level. Here, it should be noted that for typical nonwoven compositions, the bonding polymer provides a lower tensile strength than the other polymer, meaning that the weakest points are usually the bonds and not the filaments themselves. This characteristic is also very often affected by the fiber cross-section. For example, polyethylene as a bonding polymer provides a lower tensile strength than polypropylene or polyester. For example, bonds between core/sheath structured filaments with polyethylene in the sheath are relatively weak, as the sheath is usually a rather thin coating of the inner core. As a result, it is in general easier to break filament-to-filament bonds than the filaments themselves. See Figs. 15 to 19.

For example, bulkiness is one of the key features. As mentioned above, the filamentary batt should be bulky enough to allow a proper flow of hot fluid during bonding, for example, during air-through bonding process. The final fabric should also be bulky, as bulkiness is very important for human perception and bulkier fabrics are often perceived as softer. The strata structure provides bulkiness, for example, stratum B is typically very bulky, increasing bulkiness of the whole structure. On the other hand, stratum or strata with a higher interfilamentary conjunction density level decreases the bulkiness of the whole structure and in extremely bulky structures the outer stratum or strata may not form at all.

The fabric according to the invention has bulk density of less than 60 kg/m3, preferably of less than 58 kg/m3, more preferably of less than 56 kg/m3, more preferably at less than 54 kg/m3.

For example, the fabric according to the invention may have a bulk density of more than 15 kg/m, preferably of more than 20 kg/m3, more preferably more than 25 kg/m3, most preferably more than 30 kg/m3.

Bulk/bulkiness expresses the number of kilograms per one cubic meter and thus the lower the value, the bulkier is the material; concurrently, we can use the "Thickness to Basis Weight ratio" in dm3/kg or l/kg to express the volume of one kilogram of fabric in litres, where the higher the value, the higher the bulk/bulkiness.

For example, the fabric according to the invention might have a Thickness to Basis Weight ratio of at least 16.5 l/kg, preferably of at least 17.0 l/kg, preferably of at least 18.0 l/kg, more preferably at least 18.5 l/kg.

For example, the fabric according to the invention might have a bulk density of a maximum of 66 l/kg, preferably of no greater than 50 l/kg, preferably of no greater than 40 l/kg, more preferably no greater than 33 l/kg.

For example, the fabric according to the invention might have a basis weight of at least 5 gsm, preferably of at least 10 gsm, more preferably of at least 15 gsm.

For example, the fabric according to the invention might have a basis weight not greater than 200 gsm, preferably not greater than 150 gsm, preferably not greater than 100 gsm. For example, the fabric according to the invention might have a recovery of at least 0.5 (which corresponds to 50% recovery of the original thickness), preferably of at least 0.6, more preferably of at least 0.7, more preferably of at least 0.8, most preferably of at least 0.9.

For example, the fabric according to the invention might have a resilience of at least 5%, preferably of at least 10%, more preferably of at least 13%, more preferably of at least 15%, more preferably of at least 18 %.

The above description of the strata structure, especially as shown in the sketches, presupposes a uniform laydown of filaments in the batt in all 3-dimensions. Such uniformity is desirable for the majority of nonwoven fabric applications. Non-uniformity can typically be seen with the human eye directly. The fabric looks denser/thicker in some places and less dense/thinner/weaker in others. In extreme cases, the fabric may seem to consist of dense islands placed at a distance from each other connected by a sparse web of filaments.

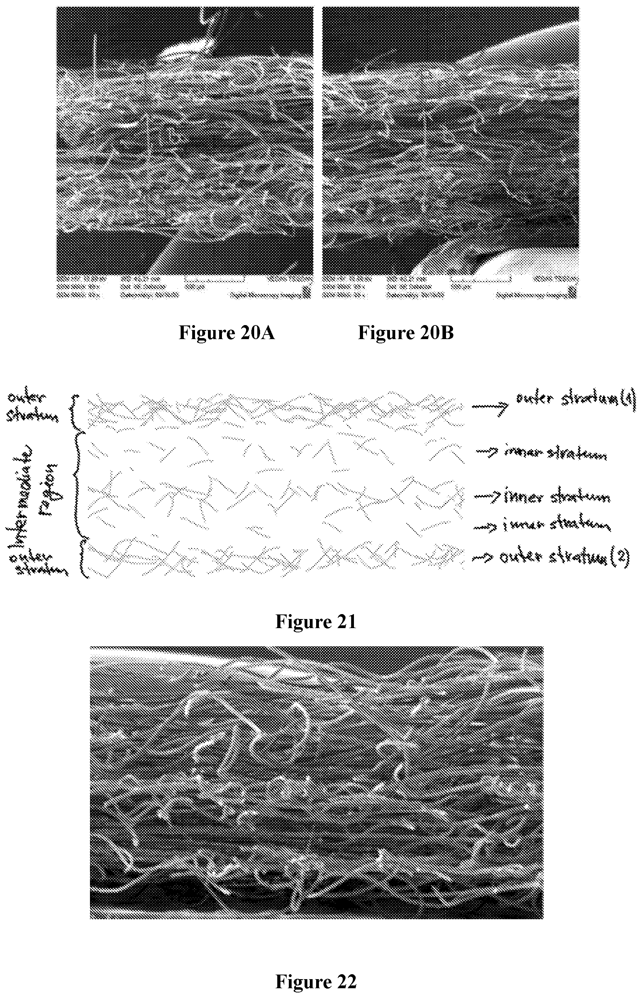

However, even a fabric that is judged by human observers as being uniform, may contain small areas with higher and lower density of non-uniformity in all 3 dimensions of the fabric. Fibers with crimp, typically resulting from self-crimping or from activated-crimping or through controlled shrinking, have a propensity to form structures characterised by areas of higher and lower density, i.e. to form into micro-aglomerates in certain areas, whilst leaving relatively empty micro-spaces in other areas. When inspected on the microscale in the cross-section of the fabric, denser areas can partially mask strata with lesser interfilamentary conjunction and vice-versa. See Figs. 20A and 20B.

The aim of our invention is to describe the strata structure and its advantages as compared to the layered approach. As mentioned above, the strata structure can be formed in one layer of a nonwoven fabric, or in other words, the strata structure can be formed independently of the fabric layers.

The strata structure can be with advantage combined with layering. For example, the fabric according to the invention can consist of two or more filamentary layers wherein at least one outer layer of filaments is structured into at least one outer stratum providing a higher interfilamentary conjunction density level and at least one other stratum with a lower interfilamentary conjunction density level.

As is described in detail above, a single layer can comprise one, two or more strata. In general, one strata can form part of one layer, can be equal to one layer or hypothetically can comprise more layers. Within the scope of this invention, we consider a layered fabric comprising at least one layer in which at least 2 strata are formed.

For example, the fabric according to the invention comprises at least one layer of endless filaments in which at least 2 strata are formed.

For example, layers with a different filament thickness and amount of bonding polymer can be combined together to achieve, for example, a fabric with one surface with very good abrasion resistance (provided by a layer with finer fibers and higher amount of bonding polymer) and overall bulkiness (provided by a layer with coarser fibers and a lower amount of bonding polymer) , as described for example in REIFENHAUSER patent application No. EP 19189238.9 (not published yet)

For example, layers with a different amount of bonding polymer on the filament's surface can be combined together, for example S/S and C/S or eC/S filaments can be combined together to produce, for example, a fabric with enhanced soft-loft properties provided by a layer of filaments with a lower amount of bonding polymer and very good abrasion resistance on the surface of the filaments with a higher amount of bonding polymer. A person skilled in the art may appreciate various layer combinations utilising the advantage of a strata structure formed in some or all of them. Strata structured filamentary layers can also be combined with advantage together with a short fiber layer or layers, films, etc. Layering can also achieve specific strata structures produced by exposing batts to various sources of heat flow. For example, a bulky fabric formed from 2 layers that is produced using 2 spinning beams, pre-consolidated with hot air and then bonded in a hot air oven may form a structure where 5 strata with alternating higher and lower interfilamentary conjunction density levels are visible. See Figs. 21 and 22.

Not to be bound by a theory, we believe that an inner stratum with a interfilamentary conjunction density level that is located between two lower interfilamentary conjunction density level strata may in certain cases be supported by batt pre-consolidation, where, for example, hot -fluid-source (like hot-air-knife) and/or a second or any further hot-fluid-source (according to the production needs) after one, some or each production beam are set together with a vacuum set below the belt can help to form higher interfilamentary conjunction density nuclei, and thus provide a higher probability of an inner higher interfilamentary conjunction density level strata structure formation in the fabric.

Similar structures can also be produced, for example, with specific layer combinations. For example, a 2-layer fabric, where both layers are formed from crimpable fibers with different levels of inner filament crimp force (for example with a different filament cross-section, a different component ratio, a different process setting to produce different levels of latent crimp, etc.) can lead to independent filament movement in both layers to form strata with a higher interfilamentary conjunction density level on the layer's surface, in other words, on both the fabric surfaces and in the bordering area between the layers).

The fabric according to the invention can be produced from a batt containing multi-component filaments comprising a bonding polymer with a lower melt temperature on at least a part of its surface. The batt on the moving belt is exposed to heat treatment. Heat can be transferred into the batt by means of a hot fluid, for example, hot air. Generally, heat can be transferred into the batt at different stages of the production process, for example, immediately after the filaments are laid on the belt to pre-consolidate the structure, during a heat activation process, during the bonding process, etc.

Hot fluid enters the filament batt surface, flows around the filaments and a part of the heat that is carried by the hot fluid is transferred into the colder filaments. Since some heat is transferred to the filaments on the batt surface, the temperature of the hot fluid decreases slightly and so does the temperature difference between the filaments and the hot fluid. A person skilled in the art would acknowledge that when filaments at the surface acquire heat, the filament temperature increases and the hot fluid-to-filament temperature difference decreases. With sufficient time and heat, all the filaments within the fabric can be heated up to a uniform temperature and fiber-to-fiber bonding can be homogenous across the entire thickness of the fabric. The fabric can be called uniformly, fully or well bonded.

It should be noted that filament-to-filament bond formation is also dependent on the local, fluid resistance pressure intensity, i.e. filaments may be in contact with each other or intersecting each other, and they will not form a bond, or will form only a weak bond, whereas filaments in more intense contact will form stronger bonds by means of the molten low melting temperature polymer. The pressure created when hot air flows through the fabric by means of the fabric's dynamic fluid resistance along the hot fluid's predominantly perpendicular path through the fabric, results in a subsequent decrease in the fluid's temperature and its capacity to transfer energy, gradually declining from the point of first impact with the exposed fabric's surface towards the other side of the fabric, where upon exiting from the fabric the temperature and fluid flow rate is lower, which results in a bond density differential across the cross-section of the fabric that manifests itself in the formation of a stratum within the fabric layer.

The product according to the invention claims a non-uniform interfilamentary conjunction density bonding throughout its thickness. The process settings and the machinery used to create such a product out of a filamentary nonwovens batt should be capable of providing the needed hot air constant by means of flow rates and temperature both in the CD as well as in the MD, which also means that they are constant over the time. This requirement applies for all hot air supply devices such as the hot air knife, hot air field, thermobonding oven with drums, flat belt oven or combinations of drum bonding and flat belt bonding.

In the recommended form of the configuration according to the invention there are multi-component or preferably bi-component filaments, produced by spinning in a spinner or using a spinneret, and subsequently preferentially passed through a cooler. Inside this cooler, the filaments are usually cooled by means of a fluid flow, primarily by means of cooling air. The scope of the invention encompasses the fact that spun filaments subsequently also pass through a drawing mechanism in which they are processed by being drawn. The drawn (extended) filaments are then deposited on a moving belt, where they form a batt of filaments. In one of the advantageous configurations, by means of adjusting specific parameters that determine the draw ratio, it is possible to then create filaments in the batt that have a controlled degree of potential shrinkage. In other advantageous combinations, it is possible, by means of setting crimpable filament cross-

EP 4 237 612 B1

section and adjusting specific parameters that determine the draw ratio and cooling, to subsequently create filaments in the batt that provide self-crimping or have the desired level of latent crimping.

According to the preferred form of machinery and process configuration of this invention, an inserted diffuser will be used as a magazine mechanism, that controls the deposition of filaments and that is installed between the drawing mechanism and the filament deposition location. The scope of the invention encompasses the fact that at least one diffuser is used, the opposing side walls of which diverge from each other relative to the pass-through direction of the filaments. A highly recommended form of the configuration of the invention is characterised by the fact that the drive unit of the cooling mechanism and drawing mechanism is designed as an enclosed system. Inside this enclosed system, no additional air source is used, which would supplement the supply of external cooling media or cooling air into the cooling mechanism. Such an enclosed system has proven itself to be especially suitable in the production of nonwoven fabrics.

In the case of the production of nonwoven fabrics according to the invention utilising shrinkage, it was found that the technical solution according to this invention, which eliminates the problem associated with the shrinkage of filaments is particularly functionally reliable and effectively feasible when the aforementioned unit is utilised, particularly when apart from the especially preferred form of configuration a diffuser is also used, which is arranged between the drawing mechanism and the filament deposition location. It has already been stated that the shrinkage of a nonwoven batt that is produced by means of the spunbond method can be very specifically adapted or regulated by means of the parameters of the draw ratio, cooling air / polymer ratio, and the speed of the filament.

In the case of the production of a nonwoven fabric according to the invention utilising self-crimping filaments, these filaments upon leaving the diffuser, located at the end of the drawing chamber, are released from the aerodynamic drawing forces and subsequently laid down in the vacuum supported web formation zone, where the filaments crimp as soon as the vacuum is at its lowest force at the edge of the suction zone - in the MD - and by means of such crimped filaments a resulting gain of thickness of the fabric can be achieved.

In order to consolidate the filament orientation and 3-dimensional structure, to create the thickness/bulkiness of the fabric batt, a subsequent step of applying hot air unidirectionally through the batt is performed. The parameter settings for hot fluid/hot air temperature, penetration speed and volume are mainly dependent upon:

- Total throughput of the spunmelt beam;
- Fiber size and polymer combination
- Line speed
- the batt's thickness,
- fabric basis weight g/m2,

in order to maintain the desired thickness without impacting the parameter settings of the final bonded fabric.

As the above process step can be applied multiple times by adding additional spun melt beams with either similar or different polymer combinations, fiber sizes and basis weights, the hot fluid supported consolidation steps on the common conveyor belt are preferably also applied to obtain preliminary product characteristics prior to the final bonding step. From the already stated definition it is evident that production utilising the spunbond method consists of the direct conversion of polymers to filaments, which are subsequently randomly spread out in the deposition location for the purpose of creating a nonwoven batt comprising these filaments. The spunbond process determines both the characteristics of the individual filaments as well as the characteristics of the final nonwoven fabric. The final produced nonwoven fabric cannot always be used for determining the various characteristics and conditions of the individual filaments such as, for example, rheological characteristics, structural characteristics of the polymers, activated-crimping, self-crimping level and shrinkage, which occur during the individual production steps of this nonwoven fabric. The potential crimping or shrinkage of a nonwoven fabric generally determines its ability to create a bulky nonwoven fabric, which is achieved by utilising the crimping or shrinkage of the individual filaments for achieving an increased thickness of the filament batt, which occurs, nevertheless, without the disintegration of the structure of the fabric and/or without significant changes to the length and width of the filament batt. The scope of the invention includes the fact that the crimp / shrinkage of the filaments is defined with the use of various raw materials contained in the composition of the filaments and/or by means of setting differing material processing conditions during the production of the filaments for the nonwoven fabric and/or by the use of differing filament cross-section shapes/arrangements and/or by means of adjusting the mass ratio between the various input materials and/or by setting different filament orientations.

The recommended form of the configuration of the invention does not differentiate between filaments with cross-sections supporting crimping and filaments with cross-sections not supporting crimping. Both types can be used with advantage for certain applications. Likewise, a suitable combination can be created by using crimped and non-crimped filament layers. To a person with professional qualifications in the field of technology it will be evident that there exist technological advantages provided by filaments with cross-sections not supporting crimping as opposed to crimped filaments in achieving bulky and soft yielding materials.

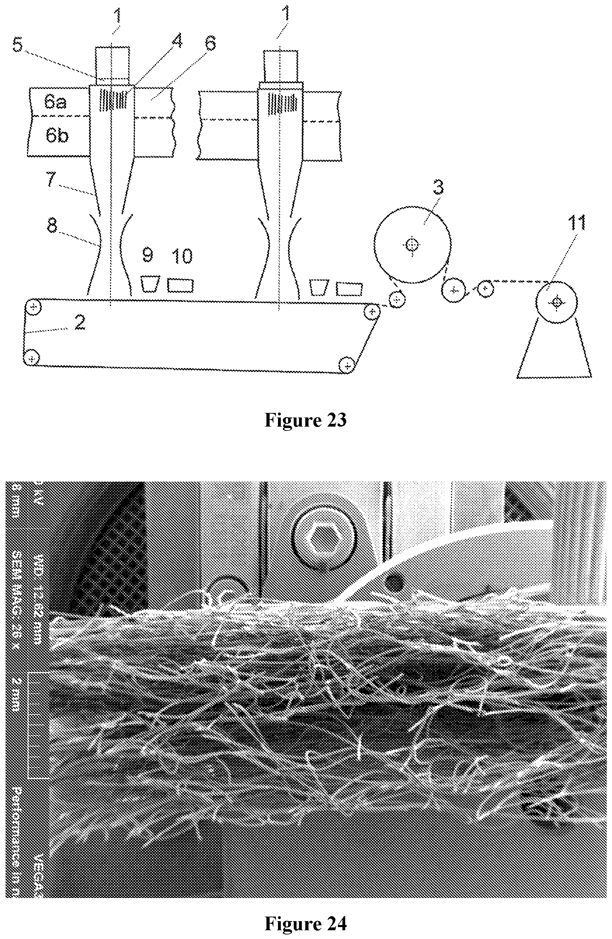

A process according to the invention might comprise one or more different bonding steps, see Fig. 23. For

# EP 4 237 612 B1

example, one batt of filaments can be laid on the moving belt and bonded from one or both sides in a bonding unit that is placed directly after the filament laydown from the spinning beam.

For various reasons it may be advantageous to have a greater distance between the filament spinning beam and the bonding unit. Very often more than one spinning beam is used to form a layered structure or for process reasons the filamentary batt may need to pass through a gap between the moving belt and the bonding unit. Under such circumstances, that are common for spunmelt production lines, batt pre-consolidation is needed to increase batt stability so that it can withstand the production process prior to being bonded. Also, for example, heat activation of latent crimping may be required before bonding. Pre-consolidation and/or activation can be performed using rolls (e.g. compact rolls), hot air (e.g. HAK, HAF units), heat radiation (e.g. infrared pre-consolidation), etc. For further explanation, a case with 3 different bonding steps was chosen to describe the process. It should be noted that the invented strata structure can be also formed by a production process with different combinations of pre-consolidation / activation and bonding units.

For example, one configuration of the invention also includes the fact that the batt of filaments is thermally pre-consolidated, i.e. it is pre-consolidated and may contain thermally formed bonds. One of the advantageous configurations of the invention is also the fact that the resulting nonwoven fabric is thermally activated for the purpose of achieving a controlled shrinkage and/or crimping of the filaments in at least one layer. Consolidation and possibly thermal activation are performed preferentially by means of at least one of the effects, which are contact with a flow of hot media (for example by means of hot air or infrared radiation) and/or contact with a hot surface. An example of such a hot surface may be primarily a part of a roller. It is desirable for thermal activation to be performed under a condition where the action occurs evenly across the entire surface of the fibrous layer. Thermal activation can be performed in a chamber, into which hot air is supplied, or by means of the layer of filaments passing through an oven. It is also possible to perform thermal activation and consolidation by means of infrared or ultraviolet light, transmitted microwaves and/or laser radiation. It is necessary to stress the fact that within the scope of this described procedure performed "on the production line", thermal consolidation may also occur directly after completion of the preceding steps of the production procedure or both steps of the procedure, which are thermal activation and consolidation, may be performed "off the production line", that is separately from the preceding steps of the production procedure. Thermal activation is thus possible to perform essentially "off the production line", that is at a different time and place.

For the solution according to the invention it is advantageous when the flow of hot media passes through the fabric and results thus in the transfer of heat throughout the entire volume of the nonwoven fabric.

The required pre-consolidation of the fibrous batt of filaments is to a significant degree dependent on the conditions of the production process. An important prerequisite may be correctly setting the level of mutual cohesion of the filaments inside the batt of filaments, and thus also the possibility of controlling the level of mutual cohesion of the filaments on the basis of the requirements of the subsequent step in the production process. In the case, where the production process is performed on the production line with activation performed on the belt itself, the required cohesion is relatively low since it is only necessary for preventing disintegration or thinning caused by significant undesirable movements during the activation process. In special cases, for example, when the filaments in and of themselves provide a very good cohesion during contact between each other or with their base, which is enabled, for example, by the shape/arrangement of their cross-section, speed of interlacement or their material composition, the cohesion characteristics of the batt of filaments may be sufficiently good even without thermal pre-consolidation. In other cases, for example when the production process is divided into two steps or when the batt of filaments is pre-consolidated prior to full activation and transferred, for example, in the form of rolls, then the required cohesion will be much higher, the result of which is also the requirement for a much higher level of pre-consolidation. Persons with professional qualifications in the field of technology with good knowledge of the production process conditions, will be able to easily identify the level of pre-consolidation that is necessary for their specific case.

For example, in case of controlled shrinkage, the activation temperature should be in the range between the glass transition temperature and the softening temperature (Vicat softening temperature according to ISO DIN 306) of the component/s A. A person with professional qualifications in the field of technology will be able to identify the activation temperature, which is optimal for the given component composition.

Inside the convection cooler, the filaments are usually cooled by means of a flowing fluid, primarily by means of cooling air. As stated above, it is necessary that the potential shrinkage or crimping of filaments is evenly distributed throughout the entire range of length, width and thickness of the batt exhibiting shrinkage. The characteristics related to the filament can be modified by adaptation of the draw ratio, cooling air / polymer ratio, and the speed of the filament, whilst, according to the invention, these parameters are practically identical for each individual filament.

The scope of the invention includes the fact that the created nonwoven fabric is created preferentially by means of the spunbond method on a spinning beam 1. At the same time it is evident that multiple layers may be deposited on top of each other and subsequently these layers are transferred together on at least one forming belt 2 into the mechanism 3 for final consolidation.

Filaments 4 are created by means of spinning in spinnerets 5. The arrangement of the filaments may be optimised by their alternating placement, by means of which a condition can be attained, where each of the individual filaments has a very similar weight and is supplied with cooling air of very similar temperature. The spinnerets may have varying numbers of capillaries and likewise varying diameters (d) and lengths (l) of these capillaries. The length (l) is, as a rule, calculated as the multiple of the diameter of the capillary and for this application area is selected in the range from 2 to 10 l/d. The number of capillaries needs to be selected on the basis of the required final diameter of the filament and the required or planned total processed amount of polymer together with the required filament spinning speed. The number of capillaries may change in the range 800 - 7000 capillaries per metre, at which it is possible to attain filaments with a diameter in the range from 8 to 45 μm. The diameter of the capillaries and the filament speed are selected to enable achieving the correct level of potential shrinkage of the final filament. The speed of the filament should be defined in the range 1000 to 10000 m/min, for filaments with a cross-section not supporting crimping and exhibiting shrinkage in the range 3000 to 5500 m/min and the diameter of the capillaries should be selected in the range from 200 to 1000 μm, which enables achieving a suitable process draw ratio in the range from 200 to 1300 in the case of circular capillaries, whilst for achieving the required level of production line productivity, in the case of these circular capillaries, it is most advantageous to have a draw ratio in the range from 300 to 800. Non-circular capillaries, as a rule, exhibit higher draw ratio values, which are to a significant degree dependent on the shape of the capillary and on the relative ratio of its surface and volume. The volume and temperature of the cooling air is set in such a way as to enable achieving the correct draw ratio and correct cooling conditions. It has been found that in respect to this invention, it is useful when the ratio of the cooling air volume to the spun polymer is in the range from 20:1 to 45:1. The volume and temperature of the cooling air are controlled in the cooler (6). This temperature can be set in the range from 10°C to 90°C, preferentially in the range from 15°C to 80°C, thus in such a way that the cooling conditions can be used in specific cases to control the course of shrinkage. The cooling conditions determine how quickly the filaments during the spinning process cool down from the melting temperature to the glass transition temperature. For example, setting a higher cooling air temperature results in a delayed cooling of the filaments. In practice, for the purposes of this invention, achieving the required and usable cooling air temperature range is easier when the cooler is divided into 2 zones in which the temperature range can be controlled separately. In the first zone 6a, which is located in the vicinity of the spinneret, the temperature can be set in the range from 10°C to 90°C, preferentially in the range from 15°C to 80°C and most preferentially in the range from 15°C to 70°C. In the second zone (6b), which is located in the direct vicinity of the first zone, the temperature can be set in the range from 10°C to 80°C, preferentially in the range from 15°C to 70°C and most preferentially from 15°C to 45°C.

Thereafter, filaments are guided through the drawing zone 7. Here the filaments are drawn by drawing forces created by the effect of the cooling air speed. The cooling air volume and the adjustable geometry of the drawing zone enable a certain air speed to be attained, which is subsequently transferred to the filament speed. This filament speed then together with the processed amount of polymer defines the diameter of the filaments. The potential shrinkage / contraction is regulated by means of the filament speed, the draw ratio and the cooling air / polymer ratio.

In the next step, the filaments are fed into the diffuser 8, the opposing walls of which diverge from each other relative to the travel direction of the filaments. The positions of these walls can be adjusted in a manner that enables attaining nonwoven fabrics with an even composition, on which the individually deposited filaments form an arrangement exhibiting an omnidirectional orientation in the MD/CD plane.

Concurrently, it is evident that the deposited batt of filaments is affected by air, by the effect of which these filaments are fed into the diffuser. The air current can be adapted in a way as to create various arrangements, from evidently zigzag filament depositions up to truly circular loops and furthermore, likewise, elliptical structures oriented in the CD direction. Filaments are deposited on a formation belt and transported to at least one mechanism 9 for pre-consolidation. Cooling air flows through the deposited filament batt and through the formation belt and subsequently is channelled away from the processing area. The volume of the drawn air can be adjusted in a way that makes the deposition of filaments easier and, likewise, ensures effective contact of the filament batt with the formation belt. The pre-consolidation mechanism is located in the vicinity of the diffuser. The formation of the filament batt is controlled by means of drawn air-throughout the entire scope of the route between the diffuser and the pre-consolidation mechanism. Pre-consolidation of the filament batt is performed by means of hot air.

The amount of energy transferred to the filament batt is controlled by a process parameters that enables the filaments to be softened or pre-melted only to a certain degree, which ensures the attainment of good cohesion between the individual filaments. After the necessary cohesion between the filaments is attained, the fibrous batt can be transported on the formation belt without additional help of any auxiliary mechanism and without affecting or risking destruction / damage by the effect of forces that arise during this transport. This pre-consolidation procedure is, likewise, sufficient for moving the filament batt to a different deposition zone on a production line consisting of multiple spinning beams. The energy transferred to the filaments may not be sufficient for activation of shrinkage of these filaments.

The method according to the invention includes the determination of balance between the pre-consolidation parameters: pre-consolidation temperature, pre-consolidation air speed and the pre-consolidation time. Pre-consolidation time is understood to mean the time during which the batt of filaments is modified by the pre-consolidation air.

It is recommended for the pre-consolidation time of the filament batt to be in the range from 1 to 10000 ms, preferentially in the range from 2 to 1000 ms and most preferentially in the range from 4 to 200 ms.

The speed of the pre-consolidation air that is used in this pre-consolidation unit is set in the range from 0.1 to 10 m/s, preferentially in the range from 0.8 to 4 m/s. It is recommended for the consolidation temperature during pre-consolidation to be in the range from 80°C to 200°C, preferentially in the range from 100°C to 180°C. In one of the forms of configuration, this pre-consolidation temperature is in the range from 90°C to 150°C, primarily from 110°C to 140°C.

In one of the advantageous configurations in the area of the production line, which is arranged following the diffuser, a batt of filaments is transported to at least one activation unit 10. The filaments are activated by means of hot air. At the same time it is understandable that the actual crimping or shrinkage of the shrinkable component of the filament is the function of temperature and, likewise, the function of the duration of the time for which it is subjected to the effects of temperature. Furthermore, it is evident that also the speed of the crimping / shrinkage process depends on temperature. The result that can be achieved by this control of the process is attaining a cohesive and even structure of a nonwoven fabric with a reduced density of the filament structure, which leads, likewise, to an increased thickness of this nonwoven fabric.

According to one of the forms of configuration of the invention, the execution of the steps of the pre-consolidation and activation method, during which the time of the pre-consolidation and/or activation, air speed necessary for pre-consolidation and/or activation and the temperature pre-consolidation and activation are controlled by means of a combined method in a combined mechanism for pre-consolidation and activation.

One of the advantageous methods according to the invention includes the determination of the balance between the activation parameters: activation temperature, speed of activation air and activation time. Activation time is understood to mean the time during which the batt of filaments is modified by the activation air. It is evident that these parameters may be altered within the specified ranges in reaction to the potential level of shrinkage of the filament and, likewise, with the objective of setting the ideal combination between the activation time, activation temperature and activation air speed.

It is recommended for the activation time of the filament batt to be in the range from 20 to 5000 ms, preferentially in the range from 30 to 3000 ms and most preferentially in the range from 50 to 1000 ms.

The speed of the activation air that is used in this activation unit is set in the range from 0.1 to 2.5 m/s, preferentially in the range from 0.3 to 1.5 m/s. It is recommended for the activation temperature during thermal activation to be in the range from 80°C to 200°C, preferentially in the range from 100°C to 160°C. In one of the forms of configuration, this activation temperature is in the range from 90°C to 140°C, primarily from 110°C to 130°C. One of the embodiments according to the invention may comprise a gap or gaps between production or process units. It is advantageous that when releasing the preliminary fabric or batt from the conveyor belt along the MD web path, that this release is performed under the lowest possible preliminary differential speed between the conveyor belt and first friction point downstream in order to maintain, without changing the overall geometric dimensions, in particular the original thickness as well as the original haptic characteristics, e.g. the soft surface of the fabric or batt.

The final resulting product characteristic may also be dependent on the tension that needs to be applied in order to release the pre-consolidated batt from the conveyor belt as well as from each active moving surface in the machine direction which can also be termed as friction points.

In particular, the release tension of the batt from the conveyor belt may be critical. Controlled tension is normally described as a force per linear fabric dimension and its extension across the width, but process wise for defined and controlled parameter settings there is an accepted way to "interpret" tension by the differential speed between 2 downstream-adjacent friction points.

As it is dependent primarily on fabric weight, line speed, surface friction between the fabric and the supporting surface, the differential speed setting is the direct way to adjust the active driven surface speed.

For example, the process according to the invention may comprise the differential speed between the conveyor belt and the intake drum of the air-through-bonding unit has to be below 1.0%; more preferably below 0.5% and even more preferably below 0.3%. A differential speed below 1.0% means that the speed of the second device may be in the interval from +1.0% to -1.0%.

One of the embodiments according to the invention comprises the conveyor belt (2) and is carried out under the condition that prior to the transfer of the the nonwoven batt from the pre-consolidation step to the consolidation unit (3), the nonwoven batt has a fabric strength in the machine direction (MD) of 0.5 to 5 N / 5 cm, and preferably 0.7 to 3.5 N / 5 cm, more preferably of 0.8 to 3.5 N / 5 cm.

Other of the embodiments according to the invention comprises the conveyor belt (2) and is carried out under the condition that prior to the transfer of the the nonwoven batt from the pre-consolidation step to the consolidation unit (3), the nonwoven batt has a fabric strength in the machine direction (MD) of higher then 6 N / 5 cm, and preferably higher then 8 N / 5 cm, more preferably higher then 10 N / 5 cm.

One of the embodiments according to the invention includes intermediate cooling between pre-consolidation step and final consolidation step. For example, nonwoven batt on its way can be exposed to cooling medium, preferably air having temperature equal or lower than 70°C, preferably equal or lower than 60°C, most preferably equal or lower than 55°C. For example, the intermediate cooling may be performed by exposition of pre-consolidated batt to ambient air. Not to be bound by the theory, we believe that intermediate cooling, where especially at least one surface of the nonwoven is heated during pre-consolidation, exposed to the lower temperature and then heated up during consolidation steps, is advantageous for denser outer strata formation.

An advantageous configuration according to the invention includes the final consolidation procedure, which consists of modifying the filamentary batt using hot air in the consolidating mechanism (3). Inside this consolidating mechanism, the filamentary batt is consolidated into a fabric with formed filament-to-filament bonds. This can be achieved by means of multiple various devices, which include, for example, a consolidating mechanism with a bell-shaped drum, consolidating mechanism with a flat belt or a multiple-drum consolidating mechanism. It should be noted that thermoplastic polymers and their blends are characterized by the phenomenon that when exposed to heat, they exhibit a gradually increasing state of plastic softening (decreasing viscosity) above their glass transition point (when all amorphous parts start to soften) and below the melting point (when all crystalline parts are molten). The melting point is normally in a very narrow temperature range (max 2.0 °C) and defined by the homo-polymer or co-polymer that is used. In the case of polymer blends, a narrow temperature range can be determined when the polymer blend becomes sticky and is able to form filament-to-filament bonds.

An advantageous configuration according to the invention includes the final consolidation procedure being performed using at least 3 different consolidation sections. Essentially, the air flow is substantially perpendicular to the fabric and maintains a uniform, low variation temperature and volume flow.

The first consolidation section pre-heats the fabric close to below the melting point temperature of the bonding polymer. Preferably the temperature is set to be 5-20°C lower than the bonding polymer's melting point temperature, more preferably the temperature is set to be 5-15°C lower than bonding polymer's melting point temperature, with advantage the temperature is set to be 5-10°C lower than bonding polymer's melting point temperature. With advantage the first consolidation section comprises alternating heat flow directions entering from the first and the second outer surface of fabric.

The second consolidation section is set to achieve the narrow melt temperature window of the low temperature melting polymer composition to allow the formation of fusion bonds. On the other hand the set temperature in relation to the fabric's basis weight, fiber size and cross-section ratio between the component polymers shall be in a range of no more than 5.0 °C below to no more than 3.0 °C above the melting temperature of the bonding polymer. For example when the melting point is 130°C, the set temperature should be in a range of 125°C (130-5) to 133°C (130+3). Preferably, the temperature is set to be in a range between 5°C below the bonding polymer melting temperature and to equal to the bonding polymer melting temperature, more preferably the temperature is set to be in a range of 4°C to 1°C below the bonding polymer melting point temperature. With advantage the second consolidation section comprises alternating heat flow directions entering from the first and the second outer surface of fabric.

The third consolidation section is a cooling section, providing much colder air, preferably with the temperature of 10-40°C, more preferably 20-30°C. Ambient air can be used. A cooling section helps to solidify the filaments, or at least the filaments on the fabric's surface and to set the formed strata structure of the fabric. With advantage no extra tension is applied directly before and during the cooling process. With advantage, another cooling step can be applied after the consolidation unit. Further cooling may be provided by further air flow, cooling roll, etc. With advantage, further cooling is performed when the temperature of the fabric exiting the third consolidation section has not reached ambient temperature. With advantage the fabric shall reach the ambient temperature, preferably the fabric shall reach the temperature of 40-10°C, even more preferably the fabric shall reach the temperature of 20-30°C. The described process produces bulky, soft and low fuzz nonwoven fabrics at high throughput and high production speed for advantageous economical reasons.

For example, in one embodiment according to the invention, the 4-drum-hot-air-through consolidation device can be used. This device enables a process with short dwell times even at high speeds but also with sufficient exposure to the necessary hot air flow and hot air volume along a maximised web path for achieving the necessary, low viscous melt flow for creating fusion bonds in a defined narrow parameter window. Drums in the machine direction allow contact angles of at least 100°, preferably at least 130°, more preferably at least 150°, with advantage at least 160°.

The exact parameter setting window for the chosen device depends on the chosen bonding polymer as well as the filament size, the filament cross-section and the mass ratio between the polymer component formulations.

The 4-drum device also enables intense, alternating, substantially vertical hot air flow through the substrate in a short time. The first pair of drums is set to preheat the fabric structure just below the softening and melting point of the low melting point polymer composition. The second pair of drums is set to achieve the melt temperature window of the low melting point polymer composition to allow the formation of fusion bonds. In order to maintain the fabric's structure and to maintain the fusion bonds intact, the last drum contains a hot section and a cooling section along its circumference in the machine direction. It is advantageous that the fabric structure is solidified, or at least the surface of the fabric structure is solidified before it is released from the consolidation device. A separate additional cooling roll with high flow cooling air-through the fabric is located at the shortest possible distance from the last roll of the air-through-bonding consolidation device which finalizes the solidification of the fabric with immediate cooling.

The consolidated nonwoven fabric is in the final phase wound on to a spool (11). In the event that it is necessary to modify the surface characteristics of the nonwoven fabric, for example, for the purpose of achieving an improved transmission of fluids or an increase ability to drain them away, the spraying mechanism or the dip roll is located either between the moving belt and the final consolidating mechanism, or between the final consolidating mechanism and the spool.

One of the forms of configuration of the invention consists of combining the steps of activation and consolidation together, where within the consolidating mechanism the activation time and/or consolidation time, the air speed necessary for the activation and/or consolidation, and activation and/or consolidation temperature are controlled.

An important element is determining the balance between the consolidation parameters: consolidation temperature, speed of the consolidation air and the consolidation time. Consolidation time is understood to mean the time during which the batt of filaments is modified by the consolidation air. It is evident that these parameters may be altered within the specified ranges in reaction to the potential consolidation level of the batt of filaments and, likewise, with the objective of achieving the ideal combination between the consolidation time, consolidation temperature and consolidation air speed.

It is recommended for the consolidation time of the filament batt to be in the range from 200 to 20000 ms, preferentially in the range from 200 to 15000 ms and most preferentially in the range from 200 to 10000 ms.

The speed of the consolidation air that is used in this consolidation unit is set in the range from 0.2 to 4.0 m/s, preferentially in the range from 0.4 to 1.8 m/s. It is recommended for the consolidation temperature during thermal consolidation to be in the range from 100°C to 250°C, preferentially in the range from 120°C to 220°C. In one of the forms of configuration, this consolidation temperature is in the range from 90°C to 140°C, primarily from 110°C to 130°C.

**Examples**

Further details and specific features of the invention will be explained based on examples. The examples illustrate the practice of the present invention but are not intended to be considered as limitations thereof. Additional embodiments and modifications within the scope of the claimed invention will be apparent to one of ordinary skill in the art. Accordingly, the scope of the present invention shall be defined by the appended claims. The examples have been produced using a spunmelt production line type R5 provided by Reifenhäuser Reicofil GmbH & Co. KG . The production line contained two spunbond beams (A, D), each of them adapted to produce bi-component filaments. In example 1, only one spunbond beam was used, in examples 2-13 both beams were used. Filaments from the first beam were laid on a moving belt to form a first layer, and filaments from the second beam were laid thereon to form the second layer of the batt. After each beam the batt was pre-consolidated using hot air, so after the first beam, one layer was pre-consolidated and after the second beam, both layers were pre-consolidated together. The resulting two-layer batt was moved to an air-through bonding unit, which contained 4 drums. The batt was air-through bonded from the first side by the first drum, then from the second side by the second drum, then again from the first side by a third drum and again from the second side by the fourth drum. First two drums present the first consolidation section, third and part of the fourth drum present the second consolidation section. Cooling of the nonwoven fabric started at the fourth drum (third consolidation section), wherein most its contact surface was used for the final stage of air-through bonding by hot air (second consolidation section), and the last part - which corresponds to 30° of the drum's contact surface - was used as a first stage of cooling the fabric, namely as air-through cooling stage (i.e. the last surface which was in contact with the nonwoven fabric directly before the fabric left the air-through bonding unit was used for initial cooling of the fabric. The resulting nonwoven was further cooled by air immediately after leaving the air-through bonding unit. Specific features of the production examples are defined below, resulting features of the produced examples are specified in tables below.

Example 1 - invention

The first beam produced the filamentary batt, each filament having a core/sheath structure (non crimpable cross-section) wherein the core formed 70 % by weight of the filament and contained polyethylene terephthalate ( type 5520 from Invista) and the sheath formed 30 % by weight of the filament and contained polyethylene (Aspun 6834 from Dow Chemicals). The second beam was switched off.

The first beam throughput was 220 kg per hour per meter of width of the first beam.

The air-through bonding unit was set to 121 °C for the first and second drum and to 127 °C for the third and most part of the fourth drum, the last part of the fourth drum (the last part corresponding to 30° of the contact surface of the drum) was set to use ambient air, the temperature of which was 24 °C.

The resulting nonwoven fabric had 75 gsm and in its cross-section strata structure is well recognisable (shown on Fig. 24). Denser strata A and C form the outer surface of fabric and a very bulky stratum B in the middle with cavities provides bulk to the fabric. It should be noted that strata may or may not be formed evenly. For example, here the stratum A is much thicker than stratum C, see Fig. 24.

| Example number | | 1 |
|---|---|---|
| No. of beams | | 1 |
| Type of filaments | | Bico |
| Polymer composition | | PET/PE |
| A filaments cross-section | | C/S |
| A component ratio in filament | | 70/30 |
| D filaments cross-section) | | - |
| D components ratio in filament | | - |
| Basis weight | g/m2 (gsm) | 74 |
| Tensile Strength @ MD | N/5cm | 36 |
| Elongation @ Peak - MD | % | 15 |
| Tensile Strength @ CD | N/5cm | 50 |
| Elongation @ Peak - CD | % | 41 |
| Thickness | mm | 1,90 |
| Bulk | kg/m3 | 39 |
| Thickness/basis weight ratio | l/kg | 26 |
| Delamination strength (bond) | N | 2,3 |
| Recovery | % | 99.9 |
| Filamentary density ratio | | |
| Stratum A : stratum B | | over 5 |
| Stratum C : stratum B | | over 5 |
| conjunction density | | |
| Stratum A : stratum B | | over 7 |
| Stratum C : stratum B | | over 7 |
| Cavities | | |
| Length L: Height H | | over 10:1 |
| % of cavities in thickness of NW | | over 15% |

Example 2 - invention

The first beam produced the first layer of filaments having an eccentric core / sheath structure, wherein the core formed 40 % by weight of the filaments and contained a polypropylene blend (type 3155 from Exxonmobil, type HG475 FB from Borealis, white colorant $TiO_2$ and erucamide) and the sheath formed 60 % by weight of the filaments and contained polyethylene (Aspun 6850 from Dow Chemicals).

The second beam produced the second layer of filaments having a side / side structure, wherein each side formed 50 % by weight of the filaments. One side contained a polypropylene blend (type 3155 from Exxonmobil, type HG475 FB from Borealis, white colorant $TiO_2$ and erucamide) and the second side contained polyethylene (Aspun 6834 from Dow Chemicals).

The first beam throughput was 160 kg per hour per meter of width of the first beam, the second beam throughput was 240 kg per hour per meter of width of the second beam.

The air-through bonding unit was set to 125 °C for the first and second drum and to 129 °C for the third and most part of the fourth drum, the last part of the fourth drum (the last part corresponding to 30° of the contact surface of the drum) was set to use ambient air, the temperature of which was 24 °C, as well as the cooling unit arranged after the consolidation unit in the MD.

The resulting nonwoven fabric had 25 gsm and the strata structure was well recognisable. The strata structure was determined by 3 different methods:

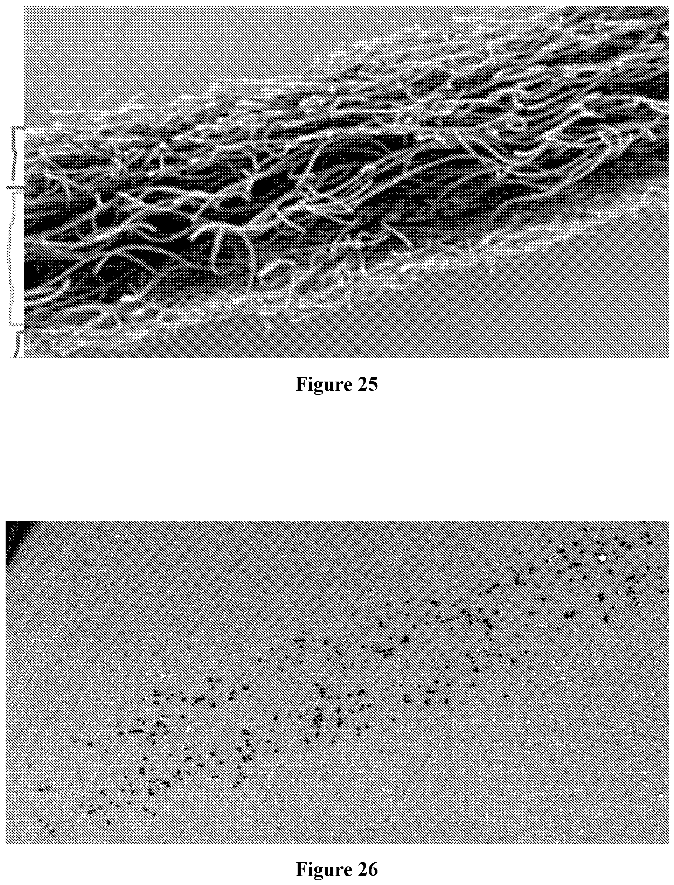

1) SEM microscopy of the cross-section was performed. It is easy to recognise the outer strata A, C and the inner stratum B. As SEM microscopy provides a view "into" the fabric, it may be very complicated to determine the filament-to-filament interconjuntions, bond or measure cavities. (Fig. 25).

2) The nonwoven fabric was fixed in the resin and a cross-section was prepared. Now we see the cross-section only, where filaments (as they are in this microscale randomly oriented) are viewed as black dots. It is obvious that filaments (dots) are much denser in strata A and C and cavities are formed in the inner stratum B. (Fig. 26)

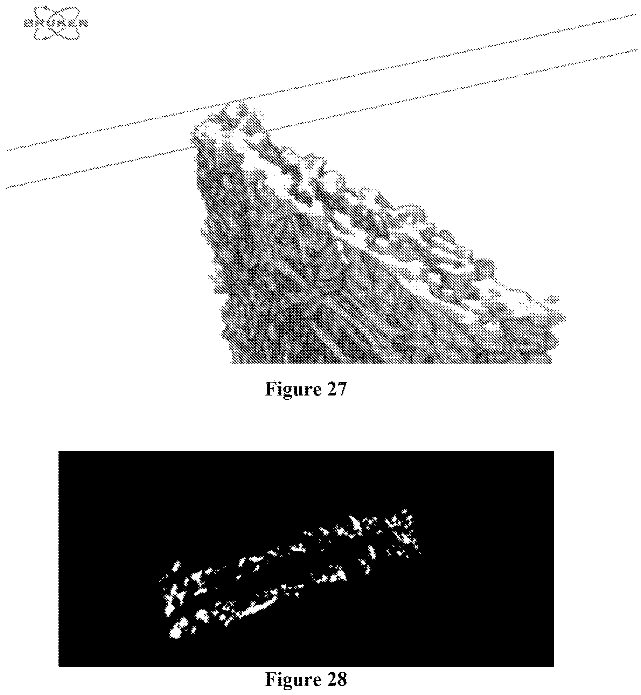

3) Nonwoven was analysed by X-ray tomography, to improve the spacial resolution of the fabric/filaments on the x-ray image, the sample was metalised in the same way as for SEM microscopy. 3D model of fabric was created on the computer (Fig. 27), and then digitally cut into a 2-dimensional fabric cross-section (Fig. 28). Metalised filaments are shown as white dots (the size of white area may be affected by the amount of metal on the filament surface). Areas with filaments closer to each other (denser areas) may also be represented by white areas. Strata A and C and the inner stratum B are very well visible here.

All 3 methods showed a clearly formed strata structure in the sample. Different views at different parts of the fabric sample also showed that the inner stratum B may be formed closer to one fabric surface, in the middle or closer to another fabric surface. It is evident (especially in the SEM picture) that the inner stratum is not necessarily formed at the layer/layer border. Also the fabric properties shown in the Table below exhibit a good combination of resistance and softness of the sample.

Examples 3-5 - inventive

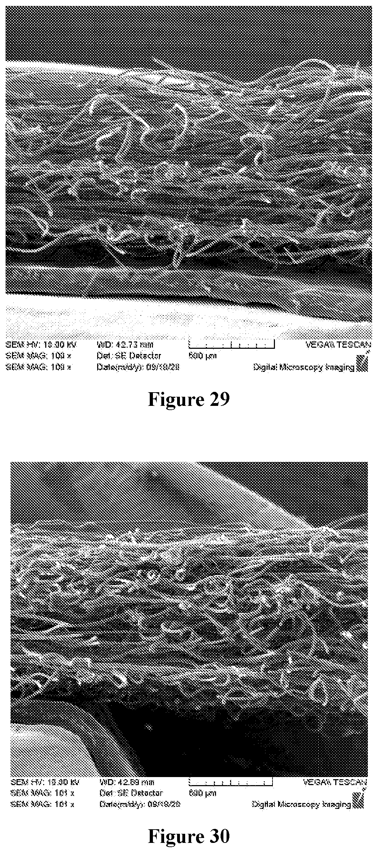

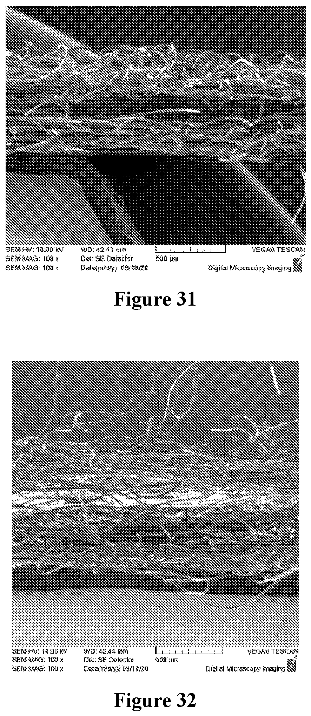

Examples 3, 4 and 5 are almost the same as example 2. They differ in basis weight and filament thickness (given by a different setup before filament laydown). The bonding process setting was also the same as in example 2. The strata structure was well recognisable (fabric cross-sections shown in Figs. 29 to 31). Fabric properties are shown in the Table below.

| Example number | | 2 | 3 | 4 | 5 |
|---|---|---|---|---|---|
| No. of beams | | 2 | 2 | 2 | 2 |
| Type of filaments | | Bico | Bico | Bico | Bico |
| Polymer composition | | PP/PE | PP/PE | PP/PE | PP/PE |
| Cross-section of filament A | | eC/S | eC/S | eC/S | eC/S |
| Component ratio in filament A | | 40/60 | 40/60 | 40/60 | 40/60 |
| Cross-section of filament D | | S/S | S/S | S/S | S/S |
| Component ratio in filament D | | 50/50 | 50/50 | 50/50 | 50/50 |
| **Basis weight** | g/m2 (gsm) | **25** | **22** | **26** | **35** |
| Tensile Strength @ MD | N/5cm | 21 | 18 | 19 | 31 |
| Elongation @ Peak - MD | % | 70 | 64 | 66 | 66 |
| Tensile Strength @ CD | N/5cm | 13 | 10 | 12 | 18 |
| Elongation @ Peak - CD | % | 112 | 104 | 99 | 106 |
| Thickness | mm | 0.57 | 0.45 | 0.56 | 0.72 |
| Bulk | kg/m3 | 44 | 49 | 46 | 49 |
| Thickness/basis weight ratio | l/kg | 23 | 20 | 22 | 20 |
| Stiffness MD | mN | 142 | 118 | 143 | 333 |
| Stiffness CD | mN | 85 | 65 | 87 | 204 |
| **Filament A diameter** | μm | **18** | **17** | **15** | **16** |
| **Filament D diameter** | μm | **16** | **16** | **17** | **19** |
| Martindale ( 16) A side | | 1 | 2 | 1 | 1 |
| Martindale ( 16) D side | | 4 | 4 | 4 | 4 |
| Delamination strength (bond) | N | 0.9 | 1.6 | 1.1 | 0.8 |
| Recovery | % | 97 | 97 | 98 | 98 |
| Elasticity | % | 27 | 32 | 25 | 21 |
| Filamentary density ratio | | | | | |
| stratum A : stratum B | | over 5 | over 5 | over 5 | over 5 |
| stratum C : stratum B | | over 5 | over 5 | over 5 | over 5 |

(continued)

| conjunction density | | | | |
|---|---|---|---|---|
| stratum A : stratum B | over 7 | over 7 | over 7 | over 7 |
| stratum C : stratum B | over 7 | over 7 | over 7 | over 7 |
| Cavities | | | | |
| Length L : Height H | over 10:1 | over 10:1 | over 10:1 | over 10:1 |
| % of cavities in thickness of NW | over 20% | over 20% | over 15% | over 20% |

Example 6 - inventive

The first beam produced the first layer of filaments having an eccentric core / sheath structure, wherein the core formed 40 % by weight of the filaments and contained a polypropylene blend (type 3155 from Exxonmobil, type HG475 FB from Borealis, white colorant TiO2 and erucamide) and the sheath formed 60 % by weight of the filaments and contained polyethylene (Aspun 6850 from Dow Chemicals).

The second beam produced the second layer of filaments having a side / side structure, wherein each side formed 50 % by weight of the filaments. One side contained a polypropylene blend (type 3155 from Exxonmobil, type HG475 FB from Borealis, white colorant TiO2) and the second side contained polyethylene (Aspun 6834 from Dow Chemicals).

The first beam throughput was 120 kg per hour per meter of width of the first beam, the second beam throughput was 240 kg per hour per meter of width of the second beam. The air-through bonding unit was set to 124 °C for the first and second drum and to 128 °C for the third and most part of the fourth drum, the last part of the fourth drum (the last part corresponding to 30° of the contact surface of the drum) was set to use ambient air, the temperature of which was 24 °C, as well as the cooling unit arranged after the consolidation unit in the MD.

The resulting nonwoven fabric had 25 gsm and the strata structure was well recognisable.

Example 7 - inventive

The first beam produced the first layer of filaments having an eccentric core / sheath structure, wherein the core formed 40 % by weight of the filaments and contained a polypropylene blend (type 3155 from Exxonmobil, type HG475 FB from Borealis, white colorant TiO2 and erucamide) and the sheath formed 60 % by weight of the filaments and contained polyethylene (Aspun 6850 from Dow Chemicals).

The second beam produced the second layer of filaments having a side / side structure, wherein the first side formed 75 % by weight of the filaments. First side contained a polypropylene blend (type 3155 from Exxonmobil, type HG475 FB from Borealis, white colorant TiO2 and erucamide) and the second side formed 25% by weight of the filaments contained polyethylene (Aspun 6834 from Dow Chemicals).

The first beam throughput was 220 kg per hour per meter of width of the first beam, the second beam throughput was 240 kg per hour per meter of width of the second beam. The air-through bonding unit was set to 117 °C for the first and second drum and to 123 °C for the third and most part of the fourth drum, the last part of the fourth drum (the last part corresponding to 30° of the contact surface of the drum) was set to use ambient air, the temperature of which was 24 °C, as well as the cooling unit arranged after the consolidation unit in the MD.

The resulting nonwoven fabric had 55 gsm and the strata structure was well recognisable.

Example 8 - inventive

The first beam produced the first layer of filaments having an eccentric core / sheath structure, wherein the core formed 40 % by weight of the filaments and contained a polypropylene blend (type 3155 from Exxonmobil, type HG475 FB from Borealis, white colorant TiO2 and erucamide) and the sheath formed 60 % by weight of the filaments and contained polyethylene (Aspun 6850 from Dow Chemicals).

The second beam produced the second layer of filaments having a side / side structure, wherein the first side formed 50 % by weight of the filaments. First side contained a polypropylene blend (type 3155 from Exxonmobil, type HG475 FB from Borealis, white colorant TiO2) and the second side formed 50% by weight of the filaments contained polyethylene (Aspun 6834 from Dow Chemicals).

The first beam throughput was 120 kg per hour per meter of width of the first beam, the second beam throughput was 240 kg per hour per meter of width of the second beam.

The air-through bonding unit was set to 125 °C for the first and second drum and to 129 °C for the third and most part of the fourth drum, the last part of the fourth drum (the last part corresponding to 30° of the contact surface of the drum) was set to use ambient air, the temperature of which was 24 °C, as well as the cooling unit arranged after the consolidation unit in the MD.

The resulting nonwoven fabric had 25 gsm and the strata structure was well recognisable.

Example 9 - inventive

The first beam produced the first layer of filaments having an eccentric core / sheath structure, wherein the core formed 50 % by weight of the filaments and contained a polypropylene blend (type 3155 from Exxonmobil, type HG475 FB from Borealis, white colorant TiO2 and erucamide) and the sheath formed 50 % by weight of the filaments and contained polyethylene (Aspun 6850 from Dow Chemicals).

The second beam produced the second layer of filaments having a side / side structure, wherein the first side formed 50 % by weight of the filaments. First side contained a polypropylene blend (type 3155 from Exxonmobil, type HG475 FB from Borealis, white colorant TiO2 and erucamide) and the second side formed 50 % by weight of the filaments contained polyethylene (Aspun 6834 from Dow Chemicals).

The first beam throughput was 160 kg per hour per meter of width of the first beam, the second beam throughput was 240 kg per hour per meter of width of the second beam.

The air-through bonding unit was set to 124 °C for the first and second drum and to 129 °C for the third and most part of the fourth drum, the last part of the fourth drum (the last part corresponding to 30° of the contact surface of the drum) was set to use ambient air, the temperature of which was 24 °C, as well as the cooling unit arranged after the consolidation unit in the MD.

The resulting nonwoven fabric had 22 gsm and the strata structure was well recognisable.

Example 10 - inventive

The first beam produced the first layer of filaments having an eccentric core / sheath structure, wherein the core formed 50 % by weight of the filaments and contained a polypropylene blend (type 3155 from Exxonmobil, type HG475 FB from Borealis, white colorant TiO2 and erucamide) and the sheath formed 50 % by weight of the filaments and contained polyethylene (Aspun 6850 from Dow Chemicals).

The second beam produced the second layer of filaments having a side / side structure, wherein the first side formed 50 % by weight of the filaments. First side contained a polypropylene blend (type 3155 from Exxonmobil, type HG475 FB from Borealis, white colorant TiO2 and erucamide) and the second side formed 50 % by weight of the filaments contained polyethylene (Aspun 6834 from Dow Chemicals).

The first beam throughput was 200 kg per hour per meter of width of the first beam, the second beam throughput was 240 kg per hour per meter of width of the second beam.

The air-through bonding unit was set to 124 °C for the first and second drum and to 131 °C for the third and most part of the fourth drum, the last part of the fourth drum (the last part corresponding to 30° of the contact surface of the drum) has been set to use ambient air, the temperature of which was 24 °C, as well as the cooling unit arranged next to the cooling unit in the MD.

The resulting nonwoven fabric had 65 gsm and the strata structure was well recognisable.

| Example number | | 6 | 7 | 8 | 9 | 10 |
|---|---|---|---|---|---|---|
| No. of beams | | 2 | 2 | 2 | 2 | 2 |
| Type of filaments | | Bico | Bico | Bico | Bico | Bico |
| Polymer composition | | PP/PE | PP/PE | PP/PE | PP/PE | PP/PE |
| Cross-section of filament A | | eC/S | eC/S | eC/S | eC/S | eC/S |
| Component ratio in filament A | | 40/60 | 40/60 | 40/60 | 50/50 | 50/50 |
| Cross-section of filament D | | S/S | S/S | S/S | S/S | S/S |
| Component ratio in filament D | | 50/50 | 75/25 | 50/50 | 50/50 | 50/50 |
| Basis weight | g/m2 (gsm) | 25 | 58 | 25 | 22 | 65 |
| Tensile Strength @ MD | N/5cm | 27 | 48 | 27 | 18 | 60 |
| Elongation @ Peak - MD | % | 49 | 61 | 45 | 56 | 64 |
| Tensile Strength @ CD | N/5cm | 12 | 28 | 15 | 10 | 31 |
| Elongation @ Peak - CD | % | 97 | 154 | 91 | 125 | 165 |
| Thickness | mm | 0.44 | 1.21 | 0.43 | 0.51 | 1.32 |
| Bulk | kg/m3 | 57 | 48 | 58 | 43 | 49 |

(continued)

| | | | | | | |
|---|---|---|---|---|---|---|
| Thickness/basis weight ratio | l/kg | 18 | 21 | 17 | 23 | 20 |
| Stiffness MD | mN | 116 | over scope | 153 | 109 | over scope |
| Stiffness CD | mN | 65 | 523 | 103 | 52 | 706 |
| Filament A diameter | μm | 15 | 18 | 14 | 16 | 16 |
| Filament D diameter | μm | 19 | 19 | 18 | 19 | 20 |
| Martindale ( 16) A side | | 2 | 2 | 1 | 3 | 1 |
| Martindale ( 16) D side | | 4 | 4 | 4 | 4 | 4 |
| Delamination strength (bond) | N | 1.1 | 1.7 | 1.7 | 0.3 | 0.4 |
| Recovery | % | 98 | 98 | 99 | 97 | 98 |
| Elasticity | % | 25 | 18 | 26 | 33 | 16 |
| Filamentary density ratio | | | | | | |
| Stratum A : Stratum B | | over 5 | over 5 | over 3 | over 5 | over 5 |
| Stratum C : Stratum B | | over 5 | over 5 | over 5 | over 5 | over 5 |
| conjunction density | | | | | | |
| Stratum A : Stratum B | | over 7 | over 7 | over 4 | over 7 | over 7 |
| Stratum C : Stratum B | | over 7 | over 7 | over 7 | over 7 | over 7 |
| Cavities | | | | | | |
| length L : height H | | over 10:1 | over 10:1 | over 10:1 | over 10:1 | over 10:1 |
| % of cavities in thickness of NW | | over 20% | over 20% | over 10% | over 20% | over 20% |

It should be noted that examples 9 and 10 might be for many applications considered underbonded because of their lower tensile and bond strength. But even here the strata structure is formed providing a higher resistance on the outer fabric surfaces.

The multilayer examples above used the combination of eC/S and S/S filaments, it should be noted, that even this combination might bring advantages, it is not important for the invention. The following example 11 shows a two layer fabric, where both layers are formed from filaments with an eC/S cross-section.

Example 11 - inventive

The first beam produced the first layer of filaments having an eccentric core / sheath structure, wherein the core formed 60 % by weight of the filaments and contained a polypropylene blend (type 3155 from Exxonmobil, type HG475 FB from Borealis, white colorant TiO2 and erucamide) and the sheath formed 40 % by weight of the filaments and contained polyethylene (Aspun 6850 from Dow Chemicals).

The second beam produced the second layer of filaments having an eccentric core / sheath structure, wherein the core formed 50 % by weight of the filaments. The core contained a polypropylene blend (type 3155 from Exxonmobil, type HG475 FB from Borealis, white colorant TiO2 and erucamide) and the sheath formed 50 % by weight of the filaments contained polyethylene (Aspun 6834 from Dow Chemicals).

The first beam throughput was 120 kg per hour per meter of width of the first beam, the second beam throughput was 240 kg per hour per meter of width of the second beam.

The air-through bonding unit was set to 124 °C for the first and second drum and to 129 °C for the third and most part of the fourth drum, the last part of the fourth drum (the last part corresponding to 30° of the contact surface of the drum) wa set to use ambient air, the temperature of which was 24 °C, as well as the cooling unit arranged after the consolidation unit in the MD.

The resulting nonwoven fabric had 25 gsm and the strata structure was well recognisable.

| | |
|---|---|
| Example | 11 |
| No. of beams | 2 |
| Type of filaments | Bico |
| Polymer composition | PP/PE |
| Cross-section of filaments A | eC/S |
| Component ratio in filament A | 40/60 |
| Cross-section of filaments D | eC/S |

(continued)

| | | |
|---|---|---|
| Component ratio in filament D | | 50/50 |
| Basis weight | g/m2 (gsm) | 25 |
| Tensile Strength @ MD | N/5cm | 32 |
| Elongation @ Peak - MD | % | 55 |
| Tensile Strength @ CD | N/5cm | 16 |
| Elongation @ Peak - CD | % | 99 |
| Thickness | mm | 0.50 |
| Bulk | kg/m3 | 50 |
| Thickness/basis weight ratio | l/kg | 20 |
| Stiffness MD | mN | 193 |
| Stiffness CD | mN | 99 |
| Filament A diameter | μm | 17 |
| Filament D diameter | μm | 21 |
| Martindale ( 16) A side | | 1 |
| Martindale ( 16) D side | | 4 |
| Delamination strength (bond) | N | 0.9 |
| Recovery | % | 98 |
| Elasticity | % | 31 |
| Filamentary density ratio | | |
| Stratum A : Stratum B | | over 5 |
| Stratum C : Stratum B | | over 5 |
| conjunction density | | |
| Stratum A : Stratum B | | over 7 |
| Stratum C : Stratum B | | over 7 |
| Cavities | | over 10:1 |
| Length L : Height H | | over 15% |
| % of cavities in thickness of NW | | over 20% |

Example 12 - inventive

The first beam produced the first layer of filaments having an eccentric core / sheath structure, wherein the core formed 50 % by weight of the filaments and contained a polypropylene blend (type 3155 from Exxonmobil, type HG712 FB from Borealis, white colorant TiO2 and erucamide) and the sheath formed 50 % by weight of the filaments and contained polyethylene (Aspun 6834 from Dow Chemicals).

The second beam produced the second layer of filaments having an side / side structure, wherein the core formed 50 % by weight of the filaments. The first side contained a polypropylene blend (type 3155 from Exxonmobil, type HG712 FB from Borealis, white colorant TiO2 and erucamide) and the second side formed 50 % by weight of the filaments contained polyethylene (Aspun 6834 from Dow Chemicals).

The first beam throughput was 160 kg per hour per meter of width of the first beam, the second beam throughput was 240 kg per hour per meter of width of the second beam.

The air-through bonding unit was set to 120 °C for the first and second drum and to 128 °C for the third and most part of the fourth drum, the last part of the fourth drum (the last part corresponding to 30° of the contact surface of the drum) was set to use ambient air, the temperature of which was 24 °C, as well as the cooling area arranged after the consolidation unit in the MD.

The resulting nonwoven fabric had 35 gsm and the strata structure was well recognisable.

Example 13 - inventive

The first beam produced the first layer of filaments having an eccentric core / sheath structure, wherein the core formed 40 % by weight of the filaments and contained a polypropylene blend (type 3155 from Exxonmobil, type HG712 FB from Borealis, white colorant TiO2 and erucamide) and the sheath formed 60 % by weight of the filaments and contained polyethylene (Aspun 6850 from Dow Chemicals).

The second beam produced the second layer of filaments having an side / side structure, wherein the core formed 50 % by weight of the filaments. The first side contained a polypropylene blend (type 3155 from Exxonmobil, type HG712 FB from Borealis, white colorant TiO2 and erucamide) and the second side formed 50 % by weight of the filaments contained polyethylene (Aspun 6834 from Dow Chemicals).

The first beam throughput was 120 kg per hour per meter of width of the first beam, the second beam throughput was 240 kg per hour per meter of width of the second beam.

The air-through bonding unit was set to 123 °C for the first and second drum and to 128 °C for the third and most part of the fourth drum, the last part of the fourth drum (the last part corresponding to 30° of the contact surface of the drum) was set to use ambient air, the temperature of which was 19 °C, as well as the cooling area arranged after the consolidation unit in the MD.

The resulting nonwoven fabric had 25 gsm and the strata structure was well recognisable.

Example 14 - inventive

The first beam produced the first layer of filaments having an eccentric core / sheath structure, wherein the core formed 50 % by weight of the filaments and contained a polypropylene blend (type 3155 from Exxonmobil, type HG712 FB from Borealis, white colorant TiO2 and erucamide) and the sheath formed 50 % by weight of the filaments and contained polyethylene (Aspun 6850 from Dow Chemicals).

The second beam produced the second layer of filaments having an side / side structure, wherein the core formed 50 % by weight of the filaments. The first side contained a polypropylene blend (type 3155 from Exxonmobil, type HG712 FB from Borealis, white colorant TiO2 and erucamide) and the second side formed 50 % by weight of the filaments contained polyethylene (Aspun 6834 from Dow Chemicals).

The first beam throughput was 140 kg per hour per meter of width of the first beam, the second beam throughput was 240 kg per hour per meter of width of the second beam.

The air-through bonding unit was set to 124 °C for the first and second drum and to 129 °C for the third and most part of the fourth drum, the last part of the fourth drum (the last part corresponding to 30° of the contact surface of the drum) was set to use ambient air, the temperature of which was 21 °C, as well as the cooling area arranged after the consolidation unit in the MD.

The resulting nonwoven fabric had 20 gsm and the strata structure was well recognisable.

Example 15 - inventive

The first beam produced the first layer of filaments having an eccentric core / sheath structure, wherein the core formed 50 % by weight of the filaments and contained a polypropylene blend (type 3155 from Exxonmobil, type HG712 FB from Borealis, white colorant TiO2 and erucamide) and the sheath formed 50 % by weight of the filaments and contained polyethylene (Aspun 6850 from Dow Chemicals).

The second beam produced the second layer of filaments having an side / side structure, wherein the core formed 50 % by weight of the filaments. The first side contained a polypropylene blend (type 3155 from Exxonmobil, type HG712 FB from Borealis, white colorant TiO2 and erucamide) and the second side formed 50 % by weight of the filaments contained polyethylene (Aspun 6834 from Dow Chemicals).

The first beam throughput was 140 kg per hour per meter of width of the first beam, the second beam throughput was 240 kg per hour per meter of width of the second beam.

The air-through bonding unit was set to 124 °C for the first and second drum and to 129 °C for the third and most part of the fourth drum, the last part of the fourth drum (the last part corresponding to 30° of the contact surface of the drum) was set to use ambient air, the temperature of which was 18°C, as well as the cooling area arranged after the consolidation unit in the MD.

The resulting nonwoven fabric had 18 gsm and the strata structure was well recognisable.

| Example | Unit | 12 | 13 | 14 | 15 |
|---|---|---|---|---|---|
| No. of beams | | 2 | 2 | 2 | 2 |
| Type of filaments | | Bico | Bico | Bico | Bico |
| Polymer composition | | PP/PE | PP/PE | PP/PE | PP/PE |
| Cross-section of filaments A | | eC/S | eC/S | eC/S | eC/S |
| Component ratio in filament A | | 50/50 | 40/60 | 50/50 | 50/50 |
| Cross-section of filaments D | | S/S | S/S | S/S | S/S |
| Component ratio in filament D | | 50/50 | 50/50 | 50/50 | 50/50 |

(continued)

| Example | Unit | 12 | 13 | 14 | 15 |
|---|---|---|---|---|---|
| Basis weight | g/m2 (gsm) | 35 | 25 | 20 | 18 |
| Tensile Strength @ MD | N/5cm | 39 | 28 | 22 | 19 |
| Elongation @ Peak - MD | % | 65 | 50 | 56 | 54 |
| Tensile Strength @ CD | N/5cm | 21 | 13 | 11 | 10 |
| Elongation @ Peak - CD | % | 124 | 96 | 91 | 96 |
| Thickness | mm | 0.63 | 0.51 | 0.46 | 0.36 |
| Bulk | kg/m3 | 56 | 49 | 44 | 50 |
| Thickness/basis weight ratio | l/kg | 18 | 20 | 23 | 20 |
| Stiffness MD | mN | 413 | - | 130 | - |
| Stiffness CD | mN | 252 | - | 65 | - |
| Filament A diameter | μm | 17 | 14 | 14 | 14 |
| Filament D diameter | μm | 19 | 19 | 19 | 18 |
| Martindale ( 16) A side | | 3 | 1 | 1 | 2 |
| Martindale ( 16) D side | | 5 | 4 | 4 | 4 |
| Delamination strength (bond) | N | 0.7 | 1.1 | 1.9 | 3.0 |
| Recovery | % | 95 | 96 | 97 | 98 |
| Elasticity | % | 20 | 34 | 37 | - |
| Filamentary density ratio | | | | | |
| Stratum A : Stratum B | | over 5 | over 5 | over 5 | over 5 |
| Stratum C : Stratum B | | over 5 | over 5 | over 5 | over 5 |
| Conjunction density | | | | | |
| Stratum A : Stratum B | | over 7 | over 7 | over 7 | over 7 |
| Stratum C : Stratum B | | over 7 | over 7 | over 7 | over 7 |
| Cavities | | | | | |
| Length L : Height H | | over 10:1 | over 10:1 | over 10:1 | over 10:1 |
| % of cavities in thickness of NW | | over 20% | over 20% | over 20% | over 20% |

**I. Testing methodology**

The **"basis weight"** of a nonwoven fabric is measured using testing methodology according to norm EN ISO 9073-1:1989 (corresponding to methodology WSP 130.1). For measurement, 10 layers of nonwoven fabric are used, whilst the sample size is 10x10 cm2.

The **"tensile strength"** and **"elongation"** of a nonwoven fabric is measured using testing methodology according to WSP 110.4.R4 (12) standard

**"Thickness"** or **"measured height"** of a nonwoven material is determined by means of a testing measurement methodology pursuant to European norm EN ISO 9073-2:1995 (corresponds to methodology WSP 120.6), which is modified in the following manner:

1. The material is to be measured by using a sample that is taken from production without being subjected to higher deformation forces or without being subjected to the effect of pressure for longer than a day (for example by the pressure exerted by the roller on the production equipment), whilst otherwise the material must be left for at least 24 hours laying freely on a surface.

2. The total weight of the top arm of the measuring machine including additional ballast is 130 g.

**"Bulk", "bulkiness"** or **"bulk density"** of a nonwoven fabric is expressed in kg/m3 and is calculated by dividing the "basis weight" in g/m2 by "thickness" in mm.

**"Thickness to Basis Weight ratio"** of a nonwoven fabric is expressed in dm3/kg or l (litres)/kg and is calculated as "thickness" in mm*1000 divided by "basis weight" in g/m2.

The "stiffness" of a nonwoven fabric is expressed by the measurement **"Handle-O-Meter"** (HOM) is determined according to the international norm WSP 90.3. The size of the sample, unless noted otherwise for the measured value, is 100 x 100 mm. HOM is measured in the MD and in the CD direction separately. Unless the MD or CD direction is specified, the arithmetic mean of these two values is taken.

The term **"regeneration"** or **"recovery"** of bulkiness here relates to the ratio between the thickness of the fabric after the release of the acting load and the initial thickness of this fabric. The thickness of a fabric is measured pursuant to norm EN ISO 9073-2:1995 whilst using a preliminary load force equivalent to a pressure of 0.5 kPa. The procedure for the measurement of regeneration consists of the following steps:

1. Preparation of fabric samples of dimensions 10 x 10 cm
2. Measurement of the thickness of 1 piece of fabric
3. Measurement of the thickness of 5 pieces of fabric placed on top of each other by using a preliminary load force equivalent to a pressure of 0.5 kPa (Ts)
4. Application of a load on to 5 pieces of fabric placed on top of each other (by a pressure of 2.5 kPa) on a thickness measurement device for 5 minutes
5. Release the device and wait for 5 minutes
6. Measurement of the thickness of 5 pieces of fabric placed on top of each other by using a preliminary load force equivalent to a pressure of 0.5 kPa (Tr)
7. Calculation of regeneration according to the following equation:

$$\text{Regeneration} = Tr/Ts \text{ (without unit)}$$

Ts = thickness of fresh sample
Tr = thickness of regenerated sample

The term **"compressibility"** here relates to the distance in millimetres by which a nonwoven fabric is compressed by the effect of a load defined during the measurement of "flexibility". It can be calculated also as the product of resilience (without unit) * thickness (mm). The **"elasticity"** or **"resilience"** of a nonwoven fabric is measured using testing methodology according to norm EN ISO 964-1, which is modified in the following manner:

1. The thickness of one fabric layer is measured.
2. Several samples of the fabric are prepared so that their total thickness after being stacked on top of each other is at least 4 mm, ideally 5 mm. The group of fabric pieces stacked on top of each other contain at least 1 piece of fabric.
3. The thickness of these stacked fabric samples is measured
4. A force of magnitude 5 N is allowed to act on to this group of stacked fabric samples at a load speed of 5 mm/min
5. The distance corresponding to the movement of the clamping elements is measured
6. Resilience is calculated according this equation:

$$R \text{ (without unit)} = T1(mm) / T0(mm)$$

or

$$R (\%) = T1(mm) / T0(mm) * 100\%$$

T1 = distance corresponding to the movement of the clamping elements at a load with a magnitude of 5 N [mm] = degree of compression of the stacked fabric pieces
T0 = thickness (according to norm EN ISO 9073-2:1995 applying a preliminary load force of 1.06 N) [mm]

**"Martindale Average Abrasion Resistance Grade Test" or "Martindale"**

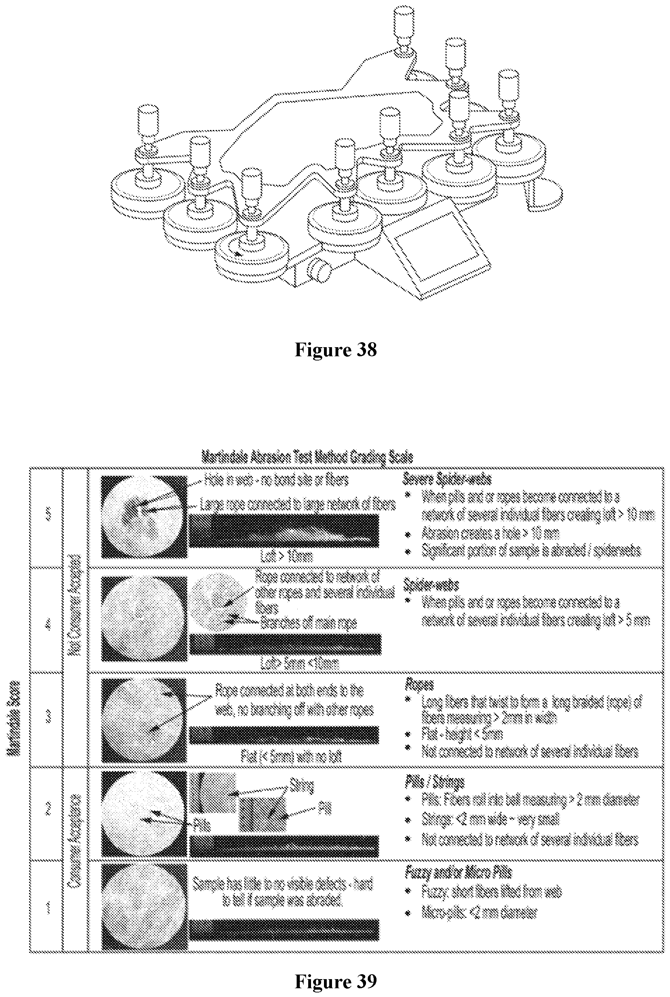

Fig. 38 is a perspective view of equipment for the Martindale Average Abrasion Resistance Grade Test. Fig. 39 is a grade scale for fuzz assessment in the Martindale Average Abrasion Resistance Grade Test herein as described in published patent application US20200170853A1 of Procter and Gamble companny

Martindale Average Abrasion Resistance Grade of a nonwoven is measured using a Martindale Abrasion Tester. The test is conducted dry.

- Nonwoven samples are conditioned for 24 hours at 23±2° C. and at 50±2% relative humidity.
- From each nonwoven sample, cut 10 circular samples 162 mm (6.375 inches) in diameter. Cut a piece of Standard Felt into a circle of 140 mm in diameter.
- Secure each sample on each testing abrading table position of the Martindale by first placing the cut felt, then the cut nonwoven sample. Then secure the clamping ring, so no wrinkles are visible on the nonwoven sample.
- Assemble the abradant holder. The abradant is a 38 mm diameter FDA compliant silicone rubber 1/32 inch thick (obtained from McMaster Carr, Item 86045K21-50A). Place the required weight in the abradant holder to apply 9 kPa pressure to the sample. Place the assembled abradant holder in the Model #864 such that the abradant contacts the NW sample as directed in the Operator's Guide.
- Operate the Martindale abrasion under conditions below:

  ◦ Mode: Abrasion Test
  ◦ Speed: 47.5 cycles per minute; and
  ◦ Cycles: 16 cycles

- After the test stops, place the abraded nonwoven on a smooth, matte, black surface and grade its fuzz level using the scale provided in Fig. xx. Each sample is evaluated by observing both from the top, to determine dimension and number of defects, and from the side, to determine the height of the loft of the defects. A number from 1 to 5 is assigned based on the best match with the grading scale. The Martindale Average Abrasion Resistance Grade is then calculated as the average rating of all samples and reported to nearest tenth.

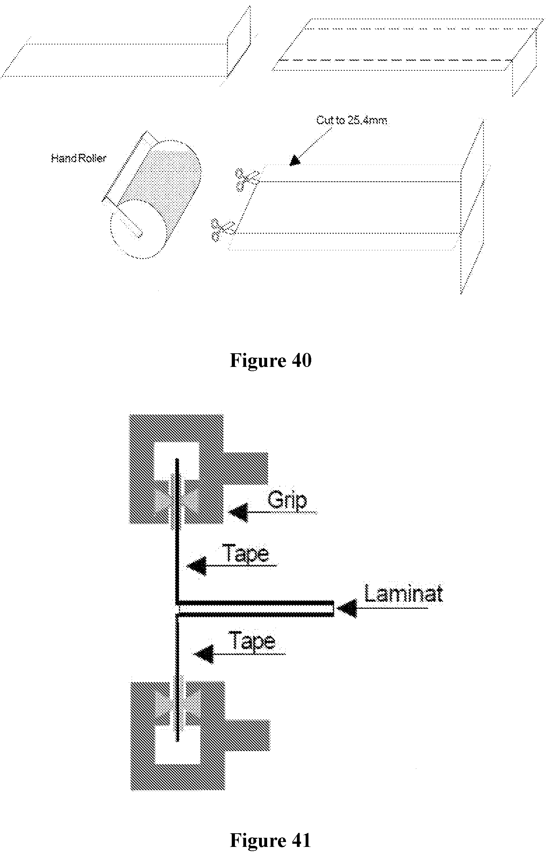

"Delamination **strength**" or "Bond" can be determined by the following method (see Figs. 40 and 41):
1) Cut a specimen 120 mm in length (MD direction), at least 30 mm in width.
2) Cut two 145 mm long stripes of tape and on one side, fold the last 25 mm of each tape strip over. Reinforce the sample with 25.4 mm wide tape and then bind it by rolling over it once in one direction with a 7 kg hand roller. Cut the sample to a CD width of 25 mm along the tape. Separate the free ends of the tape stripes.
3) The tensile strength testing machine has the following characteristics: Two jaws with clamping surfaces on the same plane parallel to the direction of motion of the applied stress. They have to be aligned so that they hold the test specimen in that plane throughout the test without slippage and without damaging the sample. The four faces of the jaws should be padded with a thin strip of soft gasket rubber to prevent slippage and damage to the test specimen. Thwing Albert, Instron, Zwick or equivalent can be used accordingly to ASTM D 76-99 for constant rate of Traverse Tensile tester.
4) Set parameters as follows:

| | |
|---|---|
| a) Gauge Length | 50 mm |
| b) Crosshead Speed | 305 mm/min |
| c) Pre-pull length | 10 mm |
| d) Measurement length | 152 mm |
| e) Sample scanning frequency | 50 Hz |

5) Place the specimen in the tester (Fig. 41) by clamping the free end of the tape, when appropriately positioned in the upper grip. Turn back the free end of the tape and clamp it in the lower grip. Align the free ends of specimens symmetrically in the grips so the tension is distributed uniformly. Adjust the load range as required so that the readings are between 30% and 80% of the full load range.
6) Start the tensile tester.
7) Measure 10 samples and count the average.
8) Report the Average Force of Separation to the nearest 0.01 N.

**"Type of fiber cross-section"** is known from the process conditions, defined by the fiber forming die. In the event that the process conditions are unknown, the following estimation can be used:

A sample of the fabric is taken and pictures of the cross-sections of at least 20 fibers are taken. The cross-section is measured on the free part of the fiber, not in the bonding point or in a place of contact with another fiber, where deformation can be expected. For each cross-section, the component surface is marked out on the image separately for each component.

The centre of mass is determined for each component based on the centroid or geometric center determination of the planar object and its position is recorded using the Cartesian coordinate system with the centre [0; 0] in the geometrical centre of the fiber cross-section. The deflection (D) of the centre of mass for each component in each fiber cross-section is calculated according to the following equation:

D = absolute value (x * y), where x and y are the coordinates of the centre of mass. When one of the x, y values is equal to 0 and not the other, the sample is discarded from evaluation) The average value and standard deviation is calculated for each component.

The fiber is considered non-crimpable when the ((average deflection) plus (standard deviation)) to total fiber cross-section surface ratio is less than 5%.

The fiber is expected to be non-crimpable when the ratio ((average deflection) minus (standard deviation)) to total fiber cross-section surface ratio is less than 10 %.

" **Interfilamentary conjunction density", "filamentary density", "length and height of cavity"** and **"% of cavities in thickness of the nonwoven"** can be determined from the fabric cross-section.

At least 10 samples are taken in MD and 10 samples in CD. Fabric is considered to have strata structure provided at least on 50% of samples the strata structure is recognised. The material is to be measured by using a sample that is taken from production without being subjected to higher deformation forces or without being subjected to the effect of pressure for longer than a day (for example by the pressure exerted by the roller on the production equipment), whilst otherwise the material must be left for at least 24 hours laying freely on a surface.

Cross-section can be made and analysed by several methods:

Methods of making fabric cross-section

1) simple cross-section:

The fabric is placed on a proper table and cut by a sharp razor blade. The cut is checked to have approximately the same thickness as the fabric (e.g. filaments are not compressed or "cut-bonded" together.

2) resin cross-section:

The fabric sample is placed into a container and poured over with liquid resin, which solidifies. Resin needs to be chosen so that in liquid form it easily fills all the void volumes in the fabric and in solid form can be easily distinguished from the fabric polymer.

The block of solid resin is cut in half, to make the fabric sample cross-section.

3) digital cross-section:

The sample is scanned (e.g. tomography, micro CT) and a digital cross-section is created in the computer.

Methods of sample cross-section analyses:

1) SEM microscopy

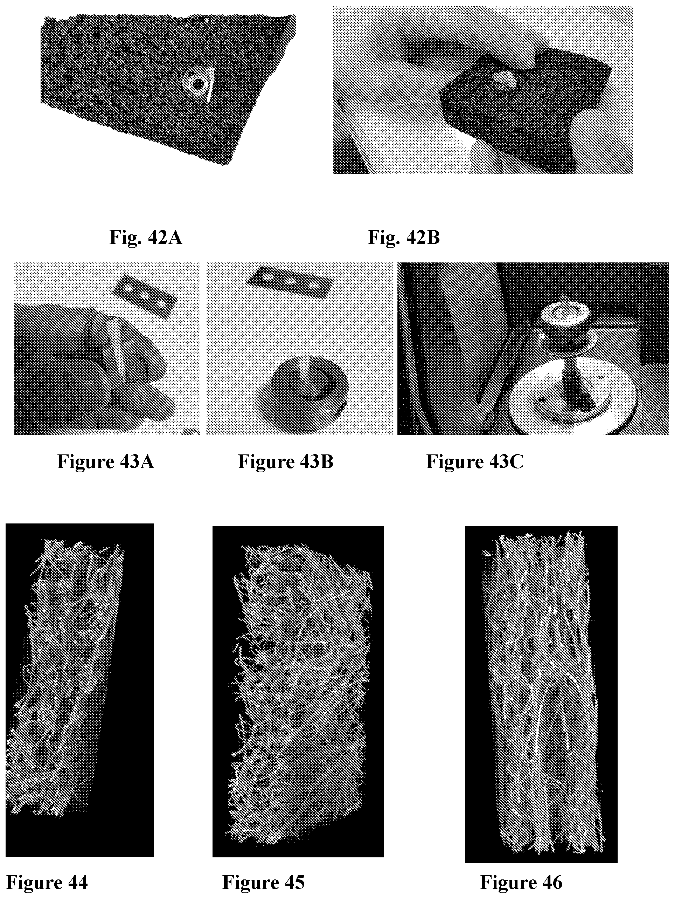

a) If needed, a filament sample is placed into a proper holder (for. example see Fig. 42A and 42B) and analysed
b) The sample is metallised with gold (e.g. using Au/Pd metallising equipment SC 7640 Sputter Coater)
c) The sample is analysed using electron microscopy (for example Tescan, using a BSE detector) using 30 kV and proper magnification (30x - 1000x)

2) 3D tomography

a) If necessary, the sample is coated using a thin layer of a contrast substance. For example, when using the 3D X-ray tomography (Skyscan), polyolefins do not visualize well. The sample can be, for example, metalised using gold (e.g. using Au/Pd metallising equipment SC 7640 Sputter Coater).
b) The sample is placed into an analysing chamber and scanned

3) 3D μCT - see "Method to determine geometric fiber statistics for a nonwoven"

All above mentioned methods and analyses (apart of 3D μCT) may be performed for example at the University of Tomáš Bata in Zlin (CZ), Faculty of Technology.

Obtained cross-section pictures are then analysed:

1) " Interfilamentary conjunction density", "filamentary density"

a) The fabric cross-section is divided into regular segments, wherein each segment represents max. 0.05 mm thickness (e.g. 0.45 mm thick fabric is divided into 9 sections of 0.05 mm thickness)
b) Each segment has the length of at least 0.5 mm, preferably the length visible on the cross-section picture
c) Density is set

i) the number of interfilamentary conjunction is calculated for each segment and expressed as density of interfilamentary conjunction (number of conjuntions / segment area); or
ii) the area taken up by filaments in each segment is calculated and expressed as filamentary density (area taken by filaments / segment area )

d) Segments adjacent to each other providing same or very similar density may be joined together to form strata
e) Strata A, B and possibly C are named and average values for them are calculated.
f) Ratio values are calculated

2) "length and height of cavity" and "% of cavities in thickness of the nonwoven"

a) Strata structure as determined above is taken and that area of stratum B is further investigated
b) Void volume areas are highlighted
c) Cavities are marked (if the area within the fabric thickness (z-direction of the fabric) is more than 3x larger than the average filament thickness and its length (MD x CD plain direction of fabric) is 5x larger than the average filament thickness, it is considered to be a cavity)
d) The area of all the cavities is calculated and expressed as a % of stratum B area
e) Each cavity is measured in height = fabric thickness direction and its length =MD x CD plane direction of fabric is measured, and the largest values are used to calculate the L:H ratio

**"Method to determine geometric fiber statistics for a nonwoven"**

In the following, we describe a software-based method for the analysis of a sample of a nonwoven material in order to characterize its geometric properties. The method uses a machine-learning approach to identify the individual fibers present in the sample followed by a geometric analysis of these fibers to obtain statistics suitable for characterizing the material. The results include the orientation and density distribution of the fibers. This analysis workflow was developed by Math2Market GmbH and is part of the GeoDict digital material laboratory.

Step 1: Obtain three-dimensional $\mu$CT image of sample

First, the nonwoven sample is digitized using a $\mu$CT scanner to obtain a 3D image. The 3D image consists of a uniform Cartesian grid where each grid cell (volume element: voxel) stores the X-Ray attenuation of the sample at the corresponding location. The pore space typically shows the lowest attenuation (smallest gray-scale value), while the material phase exhibits larger values, depending on the material and the configuration of the $\mu$CT device.

Step 2: Segment $\mu$CT image to separate material from pore space

For further analysis, the gray-scale image is noise-filtered using the Non-Local Means approach [1]. It is then binarized using a global threshold derived using Otsu's algorithm [2]. Binarization classifies each image voxel as containing either pore space or fiber material. Voxels with gray values below the threshold are classified as pore space. All other voxels are classified as fiber material. For both operations, noise filtering and thresholding, the ImportGeo module of the GeoDict software is used.

Step 3: Analyze material density distribution

Furthermore, the material density distribution in the z-direction is computed. For each slice of the image (at a given depth Z), the material density is computed as the number of white material voxels divided by the number of total voxels in the slice. This analysis is performed using the MatDict module of GeoDict.

Step 4: Apply a neural network to identify fiber centerlines

The main challenge in identifying individual fibers in $\mu$CT images is that, after binarization, the fibers are not spatially separated at contact points. This can result in under-segmentation, where multiple objects (fibers) are erroneously classified as a single fiber.

To separate the fibers, Math2Market GmbH has developed an approach to identify the centerline curves of the fibers. These centerlines are represented in a binary voxel image of the same size as the original image. In this image, voxels within about 1-2 voxels to a fiber's center are marked.

For this purpose, we have used a semantic segmentation approach using a neural network [3]. The image is analyzed by considering a 3D sliding input window, which is moved over the image. For each input window, a smaller output window is defined which is centered on the input window. The neural network analyzes the binary voxel values in the input window and produces a prediction for each voxel of the output window. The predicted value determines if a voxel inside the output window is part of a centerline. By combining the results for all these output windows we obtain a binary image which classifies each material voxel in the original image. This image transformation is implemented by the FiberFind-AI module in GeoDict, utilizing Tensorflow [4].

Step 5: Create training data for the neural networks

For the purpose of training the neural network to implement the transformation described above, Math2Market GmbH has created several artificial 3D images of nonwoven materials using the stochastic FiberGeo structure generation module in GeoDict. This module generates an analytical geometric representation of fibers as a series of line segments. At the same time, it outputs a binary image of the fiber structure, comparable to the binarization result of Step 2.

By modifying the fiber diameter in the analytical representation to about 2-3 voxels, we can likewise obtain an image of the centerlines corresponding to the artificial fiber structure. These pairs of images (fibers and centerlines) are then used to train the neural network to transform a fiber image to a centerline image. The network effectively learns to "shrink" the fibers down to their centerline curves.

Step 6: Trace fiber centerlines to obtain geometric representation of fibers

After reducing the fibers to their centerlines, we assume that the centerlines do not touch. We then separate the individual centerlines from each other by analyzing the connected components of the centerline image, under the assumption that each component corresponds to the centerline of a single fiber. A connected component is defined as a subset of material voxels that all have the same color and that cannot be enlarged by adding any touching voxels of the same color.

For each centerline, we trace a curve through the set of voxels to obtain a geometric representation of the corresponding fiber in the form of a sequence of connected line-segments (a polyline). This step is also part of FiberFind-AI in GeoDict.

As a result digital 3D model of fabric is obtained, examples of fabric comprising strata structure can be seen on Figs. 44 to 46.

Step 7: Compute analyses of the sample

To obtain " interfilamentary conjunction density", "Filamentary density", "Length and height of cavity"and "% of cavities in thickness of the nonwoven", each cross-section filament line segment is projected into plane, divided into subsegments (each max. 0,05 mm in thickness) and analysed. Values are compared among segments and if possible, some of segments adjacent to each other with same or similar results may be joined into strata. Strata A, B and possibly C are named and values for each strata are averaged from segments data.

[1] Buades, Antoni, Bartomeu Coll, and J-M. Morel. "A non-local algorithm for image denoising." Computer Vision and Pattern Recognition, 2005. CVPR 2005. IEEE Computer Society Conference on. Vol. 2. IEEE, 2005.

[2] Otsu, Nobuyuki. "A threshold selection method from gray-level histograms." IEEE transactions on systems, man, and cybernetics 9.1 (1979): 62-66.

[3] Noh, Hyeonwoo, Seunghoon Hong, and Bohyung Han. "Learning deconvolution network for semantic segmentation." Proceedings of the IEEE international conference on computer vision. 2015.

[4] Martin Abadi, Ashish Agarwal, Paul Barham, Eugene Brevdo, Zhifeng Chen, Craig Citro, Greg S. Corrado, Andy Davis, Jeffrey Dean, Matthieu Devin, Sanjay Ghemawat, Ian Goodfellow, Andrew Harp, Geoffrey Irving, Michael Isard, Rafal Jozefowicz, Yangqing Jia, Lukasz Kaiser, Manjunath Kudlur, Josh Levenberg, Dan Mané, Mike Schuster, Rajat Monga, Sherry Moore, Derek Murray, Chris Olah, Jonathon Shlens, Benoit Steiner, Ilya Sutskever, Kunal Talwar, Paul Tucker, Vincent Vanhoucke, Vijay Vasudevan, Fernanda Viégas, Oriol Vinyals, Pete Warden, Martin Wattenberg, Martin Wicke, Yuan Yu, and Xiaoqiang Zheng. "TensorFlow: Large-scale machine learning on heterogeneous systems", 2015. Software available from tensorflow.org.

**Industrial applicability**

The invention is applicable wherever a bulky nonwoven fabric with softness / resistance balance is required - for example in the hygiene industry as various components of absorbent hygiene products (e.g. baby diapers, incontinence products, female hygiene products, changing pads, etc.) or in healthcare, for example, as a part of wound sponges and/or protective garments, surgical cover sheets, underlays and other barrier material products. Further uses are also possible in industrial applications, for example, as a part of protective garments, in filtration, insulation, packaging, sound adsorption, footwear industry, automotive, furniture, etc. The invention is usable with advantage particularly in applications, where there is a requirement for increased bulkiness, compressibility and recovery of the fabric combined with a requirement for endless fibers.

**Claims**

1. A nonwoven fabric comprising a plurality of filamentary strata, wherein the fabric comprises

     - a first stratum (A), which forms a first outer surface of the nonwoven fabric and which comprises continuous multi-component filaments comprising a first component, which

          - extends along the longitudinal direction of the filaments,
          - forms at least 20 % of the area of the surface of the filaments,
          - forms filament-to-filament bonds within the first stratum (A) and
          - has its melting point at least 5°C lower than the melting point of the other components of the filaments of the first stratum (A), and

     - a second stratum (B), which comprises continuous multi-component filaments comprising a first component, which

          - extends along the longitudinal direction of the filaments,
          - forms at least 20 % of the area of the surface of the filaments,
          - forms filament-to-filament bonds within the second stratum (B) and
          - has its melting point at least 5°C lower than the melting point of the other components of the filaments of the second stratum (B), and

          - wherein the bulk density of the fabric is lower than 60 kg/m3 measured in accordance with the description and

     wherein the ratio of interfilamentary conjunction density of the first stratum (A) and interfilamentary conjunction density of second stratum (B) is at least 2, wherein the interfilamentary conjuction density is measured in accordance with the description.

2. Nonwoven fabric according to claim 1, wherein the fabric contains a third stratum (C), which forms a second outer surface of the nonwoven fabric so that the second stratum (B) is positioned between the first stratum (A) forming the first outer surface and the third stratum (C) forming the second outer surface of the nonwoven fabric and which comprises continuous multi-component filaments comprising a first component, which

          - extends along the longitudinal direction of the filament,
          - forms at least 20 % of the surface of the filaments,
          - forms filament-to-filament bonds within the third stratum (C) and
          - has its melting point at least 5°C lower than the melting point of the other components of the filaments of the third stratum (C).

3. Nonwoven fabric according to any of the preceding claims, wherein the ratio of filamentary density of the first stratum (A) and filamentary density of the second stratum (B) is at least 1.5; more preferably at least 2.0; more preferably at least 2.5; more preferably at least 3, even more preferably at least 5.

4. Nonwoven fabric according to any of the preceding claims, wherein the ratio of interfilamentary conjunction density of the first stratum (A) and interfilamentary conjunction density of second stratum (B) is at least 3.0; more preferably at least 4; more preferably at least 5, even more preferably at least 7, wherein interfilamentary conjuction density is measured in accordance with the description.

5. Nonwoven fabric according to any of the preceding claims, wherein the first component of the first stratum (A) and / or the first component of the second stratum (B) comprises a bonding polymer chosen from a group comprising polyolefins, aliphatic polyestesters, aromatic polyesters or their copolymers.

6. Nonwoven fabric according to any of preceding claims, wherein the fabric delamination strength is equal or higher than 0.5 N, preferably higher than 0.6 N , more preferably higher than 0.7 N and most preferably higher than 0.8 N, as measured in accordance with the description.

7. Nonwoven fabric according to any of the preceding claims, wherein the fabric delamination strength is equal to or lower than 10.0 N, preferably equal or lower than 8.0 N, more preferably equal or lower to 6.0 N, with advantage equal or lower to 4.0 N, as measured in accordance with the description.

8. Nonwoven fabric according to any of the preceding claims, wherein the fabric comprises at least a first layer (i) and second layer (ii) of filaments.

9. Absorbent hygiene product comprising nonwoven fabric according to any of preceding claims.

10. A method of producing the nonwoven fabric according to claim 1, comprising the steps

    a) melting

        a. at least a first polymeric material forming a first component and
        b. a second polymeric material forming at least one other component, and

    b) feeding the molten polymeric materials to nozzles of a spinning beam and extruding the molten polymeric materials through the nozzles,

        a. forming endless filaments from the molten polymeric materials exiting the nozzles
        b. wherein the first polymeric material extends in the longitudinal direction of the filaments and forms at least a part of the surface of the filaments, and has its melting point at least 5°C lower than the melting point of the other component of the filaments,

    c) cooling of the formed filaments by fluid medium having a temperature within the range of 10 to 90 °C and drawing the filaments with a draw down ratio within the range of 200 - 1300 to achieve a semi-stable crystalline state of at least the second polymeric material, and
    d) laying the filaments randomly on a formation belt to form a nonwoven filamentary batt, and
    e) pre-consolidating the nonwoven filamentary batt by heat flow for a time of 1 to 10000 ms, and
    f) pre-heating the filamentary batt by heat flow having a temperature 5 - 20 °C lower than the melting temperature of the first polymeric material, preferably at a temperature 5 - 15°C lower than the melting temperature of the first polymeric material, more preferably at a temperature 5 - 10°C lower than the melting temperature of the first polymeric material, and
    g) consolidating the filamentary batt by heat flow having a temperature of no more than 5 °C below the melting temperature of the first polymeric material and no more than 3 °C above the melting temperature of the first polymeric material, and cooling the thus consolidated filamentary batt by air flow having a temperature within the range of 10 - 40 °C, preferably 20-30°C.

11. A method of producing a nonwoven fabric, according to claim 10, wherein between pre-consolidation step e) and pre-heating step f) an intermediate cooling is performed by exposition of the pre-consolidated batt to air.

12. A method of producing a nonwoven fabric, according to claim 11, wherein the intermediate cooling is performed by air having a temperature equal to or lower than 70°C, preferably equal to or lower than 60°C, most preferably equal to or lower than 55°C.

13. A method of producing a nonwoven fabric, according to any of claims 10 to 12
wherein during the consolidation of the batt in step g) the heat flow is applied from alternated directions so that it enters the batt from one side and then from the other side of the batt.

**14.** A method of producing a nonwoven fabric, according to any of claims 10 to 13,
wherein at least a part of the steps f) and / or g) is performed by leading the batt along drums of an air-through consolidation device.

**15.** A method of producing a nonwoven fabric, according to any of claims 10 to 14,
wherein at least a part of the steps f) and / or g) are performed by leading the batt through a flat oven consolidation device.

**Patentansprüche**

**1.** Vliesstoff, der eine Vielzahl von Filamentenstrata umfasst, wobei der Vliesstoff Folgendes enthält:

- ein erstes Stratum (A), das eine erste Außenfläche des Vliesstoffs bildet und endlose Mehrkomponentenfilamente enthält, die eine erste Komponente enthalten, die

- sich entlang der Filamentlängsrichtung erstreckt,
- mindestens 20 % der Filamentoberfläche ausmacht,
- Filament- Filament-Bindungen innerhalb des ersten Stratum (A) bildet und
- einen um mindestens 5 °C niedrigeren Schmelzpunkt als der Schmelzpunkt der anderen Komponenten der Filamente des ersten Stratum (A) hat, und

- ein zweites Stratum (B), das endlose Mehrkomponentenfilamente enthält, die eine erste Komponente enthalten, die

- sich entlang der Filamentlängsrichtung erstreckt,
- mindestens 20 % der Filamentoberfläche ausmacht,
- Filament- Filament-Bindungen innerhalb des zweiten Stratum (B) bildet und
- einen um mindestens 5 °C niedrigeren Schmelzpunkt als der Schmelzpunkt der anderen Komponenten der Filamente des zweiten Stratum (B) hat, und

- wobei die gemäß der Beschreibung gemessene Rohdichte des Vliesstofs unter 60 kg/m$^3$ liegt und

wobei das Verhältnis der Dichte von interfilamentären Verbindungen des ersten Stratum (A) zur Dichte von interfilamentären Verbindungen des zweiten Stratum (B) mindestens 2 beträgt, wobei die Dichte von interfilamentären Verbindungen gemäß der Beschreibung gemessen wird.

**2.** Vliesstoff nach Anspruch 1, wobei der Vliesstoff ein drittes Stratum (C) enthält, das eine zweite Außenfläche des Vliesstoffs bildet, sodass das zweite Stratum (B) zwischen dem ersten Stratum (A), das die erste Außenfläche bildet, und dem dritten Stratum (C), das die zweite Außenfläche des Vliesstoffs bildet, liegt und aus endlosen Mehrkomponentenfilamenten besteht, deren erste Komponente

- sich entlang der Filamentlängsrichtung erstreckt,
- mindestens 20 % der Oberfläche der Filamente ausmacht,
- Filament-Filament-Bindungen innerhalb des dritten Stratum (C) bildet und
- deren Schmelzpunkt mindestens 5 °C niedriger ist als der Schmelzpunkt der anderen Komponenten der Filamente des dritten Stratum (C).

**3.** Vliesstoff nach einem der vorhergehenden Ansprüche, wobei das Verhältnis der filamentären Dichte des ersten Stratum (A) zur filamentären Dichte des zweiten Stratum (B) mindestens 1,5, vorzugsweise mindestens 2,0 beträgt; vorzugsweise mindestens 2,5; vorzugsweise mindestens 3, noch mehr vorzugsweise mindestens 5.

**4.** Vliesstoff nach einem der vorhergehenden Ansprüche, wobei das Verhältnis der Dichte von interfilamentären Verbindungen des ersten Stratum (A) zur der Dichte von interfilamentären Verbindungen des zweiten Stratum (B) mindestens 3,0; vorzugsweise mindestens 4; vorzugsweise mindestens 5, noch mehr vorzugsweise mindestens 7 beträgt, wobei die Dichte von interfilamentären Verbindungen gemäß der Beschreibung gemessen wird.

**5.** Vliesstoff nach einem der vorhergehenden Ansprüche, wobei die erste Komponente des ersten Stratum (A) und/oder die erste Komponente des zweiten Stratum (B) ein bindendes Polymer umfasst, das aus Polyolefinen, aliphatischen Polyestern, aromatischen Polyestern oder deren Copolymeren ausgewählt ist.

6. Vliesstoff nach einem der vorhergehenden Ansprüche, wobei die Delaminationsfestigkeit des Vliesstoffs mindestens 0,5 N, vorzugsweise mehr als 0,6 N, besonders bevorzugt mehr als 0,7 N und ganz besonders bevorzugt mehr als 0,8 N beträgt, gemessen gemäß der Beschreibung.

7. Vliesstoff nach einem der vorhergehenden Ansprüche, wobei die Delaminationsfestigkeit des Vlieses höchstens 10,0 N, vorzugsweise höchstens 8,0 N, besonders bevorzugt höchstens 6,0 N und vorzugsweise höchstens 4,0 N beträgt, gemessen gemäß der Beschreibung.

8. Vliesstoff nach einem der vorhergehenden Ansprüche, wobei der Vliesstoff mindestens eine erste Schicht (i) und eine zweite Schicht (ii) von Filamenten umfasst.

9. Saugfähiges Hygieneprodukt, umfassend den Vliesstoff nach einem der vorhergehenden Ansprüche.

10. Verfahren zur Herstellung des Vliesstoffs nach Anspruch 1, umfassend die Schritte

a) Schmelzen

a. mindestens eines ersten Polymermaterials, das die erste Komponente bildet, und
b. eines zweiten Polymermaterials, das mindestens eine weitere Komponente bildet, und

b) Zuführen der geschmolzenen Polymermaterialien zu Düsen eines Spinnbalkens und Extrudieren der geschmolzenen Polymermaterialien durch die Düsen,

a. Bilden endloser Filamente aus den aus den Düsen austretenden geschmolzenen Polymermaterialien
b. wobei sich das erste Polymermaterial in Längsrichtung der Filamente erstreckt und zumindest einen Teil der Oberfläche der Filamente bildet und dessen Schmelzpunkt mindestens 5 °C unter dem Schmelzpunkt der weiteren Komponente der Filamente liegt,

c) Abkühlen der gebildeten Filamente mittels eines flüssigen Mediums mit einer Temperatur im Bereich von 10 bis 90 °C und Verstrecken der Filamente mit einem Verstreckungsgrad im Bereich von 200-1300, um einen semistabilen kristallinen Zustand zumindest des zweiten Polymermaterials zu erreichen, und
d) zufälliges Ablegen der Filamente auf einem Formierband zur Bildung eines filamentären Vlieses, und
e) Vorverfestigen des filamentären Vlieses durch Wärmestrom für eine Zeit von 1 bis 10.000 ms, und
f) Vorwärmen des filamentären Vlieses durch Wärmestrom mit einer Temperatur, die 5-20 °C unter der Schmelztemperatur des ersten Polymermaterials liegt, vorzugsweise bei einer Temperatur, die 5-15 °C unter der Schmelztemperatur des ersten Polymermaterials liegt, vorteilhafterweise bei einer Temperatur, die 5-10 °C niedriger als die Schmelztemperatur des ersten Polymermaterials ist, und
g) Verfestigen des filamentären Vlieses durch einen Wärmestrom mit einer Temperatur von höchstens 5 °C unter der Schmelztemperatur des ersten Polymermaterials und höchstens 3 °C über der Schmelztemperatur des ersten Polymermaterials, und Abkühlen des so verfestigten filamentären Vlieses durch einen Luftstrom mit einer Temperatur im Bereich von 10-40 °C, vorzugsweise 20-30 °C.

11. Verfahren zur Herstellung des Vliesstoffs nach Anspruch 10, wobei zwischen Vorverfestigungsschritt e) und Vorwärmungschritt f) eine Zwischenkühlung durch Aussetzen des vorverfestigten Vlieses an Luft erfolgt.

12. Verfahren zur Herstellung des Vliesstoffs nach Anspruch 11, wobei die Zwischenkühlung mit Luft erfolgt, deren Temperatur höchstens 70 °C, vorzugsweise höchstens 60 °C und insbesondere höchstens 55 °C beträgt.

13. Verfahren zur Herstellung des Vliesstoffs nach einem der Ansprüche 10 bis 12, wobei während der Verfestigung des Vlieses in Schritt g) der Wärmestrom von abwechselnden Richtungen zugeführt wird, sodass er von der einen und dann von der anderen Seite in das Vlies eindringt.

14. Verfahren zur Herstellung des Vliesstoffs nach einem der Ansprüche 10 bis 13, wobei zumindest ein Teil der Schritte f) und/oder g) durch Führen des Vlieses entlang von Trommeln einer Luftdurchlauf-Verfestigungsvorrichtung durchgeführt wird.

15. Verfahren zur Herstellung des Vliesstoffs nach einem der Ansprüche 10 bis 14, wobei zumindest ein Teil der Schritte f) und/oder g) durch Führen des Vlieses durch eine Flachofen-Verfestigungsvorrichtung durchgeführt wird.

**Revendications**

1. Tissu non-tissé comprenant une pluralité de strates filamentaires, où le tissu comprend :

   - une première strate (A) qui forme une première surface extérieure du tissu non-tissé et qui comprend des filaments multicomposants sans fin comprenant un premier composant, qui

     - s'étend le long de la direction longitudinale des filaments,
     - forme au moins 20 % de la superficie de la surface des filaments,
     - forme des liens filament-à-filament dans la première strate (A), et
     - son point de fusion est d'au moins 5°C inférieur au point de fusion des autres composants des filaments de la première strate (A), et

   - une deuxième strate (B) qui comprend des filaments multicomposants sans fin comprenant un premier composant, qui

     - s'étend le long de la direction longitudinale des filaments,
     - forme au moins 20 % de la superficie de la surface des filaments,
     - forme des liens filament-à-filament dans la deuxième strate (B), et
     - son point de fusion est d'au moins 5°C inférieur au point de fusion des autres composants des filaments de la deuxième strate (B), et

   où la masse volumique du tissu est inférieure à 60 kg/m$^3$ telle que mesurée selon la description et où le rapport entre la densité de conjonctions entre les filaments de la première strate (A) et la densité de conjonctions entre les filaments de la deuxième strate (B) est au moins 2, où la densité de conjonctions entre les filaments est mesurée selon la description.

2. Tissu non-tissé selon la revendication 1, où le tissu comprend une troisième strate (C) qui forme une deuxième surface extérieure du tissu non-tissé de sorte que la deuxième strate (B) soit positionnée entre la première strate (A) qui forme la première strate extérieure et la troisième strate qui forme la deuxième surface extérieure du tissu non-tissé, et qui comprend des filaments multicomposants sans fin comprenant un premier composant, qui

   - s'étend le long de la direction longitudinale du filament,
   - forme au moins 20 % de la surface des filaments
   - forme des liens filament-à-filament dans la troisième strate (C) et
   - son point de fusion est d'au moins 5°C inférieur au point de fusion des autres composants des filaments de la troisième strate (C).

3. Tissu non-tissé selon l'une quelconque des revendications précédentes, où le rapport entre la densité filamentaire de la première strate (A) et la densité filamentaire de la deuxième strate (B) est au moins 1.5 ; plus préférablement au moins 2.0 ; plus préférablement au moins 2.5 ; plus préférablement au moins 3, encore plus préférablement au moins 5.

4. Tissu non-tissé selon l'une quelconque des revendications précédentes, où le rapport entre la densité de conjonctions entre les filaments de la première strate (A) et la densité de conjonctions entre les filaments de la deuxième strate (B) et au moins 3.0 ; plus préférablement au moins 4 ; plus préférablement au moins 5, encore plus préférablement au moins 7, où la densité de conjonction entre les filaments est mesurée selon la description.

5. Tissu non-tissé selon l'une quelconque des revendications précédentes, où le premier composant de la première strate (A) et/ou le premier composant de la deuxième strate (B) comprend un polymère de liaison sélectionné dans un groupe comprenant des polyoléfines, des polyesters aliphatiques, des polyesters aromatiques ou leurs copolymères.

6. Tissu non-tissé selon l'une quelconque des revendications précédentes, où la résistance au délaminage du tissu est égale ou supérieure à 0.5 N, préférablement supérieure à 0.6 N, plus préférablement supérieure à 0.7 N et idéalement supérieure à 0.8 N, telle que mesurée selon la description.

7. Tissu non-tissé selon l'une quelconque des revendications précédentes, où la résistance au délaminage du tissu est égale ou inférieure à 10.0 N, plus préférablement égale ou inférieure à 8.0 N, plus préférablement égale ou inférieure à 6.0 N, avantageusement égale ou inférieure à 4.0 N, telle que mesurée selon la description.

8. Tissu non-tissé selon l'une quelconque des revendications précédentes, où le tissu comprend au moins une première couche (i) et une deuxième couche (ii) de filaments.

9. Article d'hygiène absorbant, comprenant un tissu non-tissé selon l'une quelconque des revendications précédentes.

10. Procédé de production d'un tissu non-tissée selon la revendication 1, où le procédé comprend les étapes suivantes :

    a) fusion

        a. d'au moins un matériau polymérique formant un premier composant, et
        b. d'un deuxième matériau polymérique formant au moins un autre composant, et

    b) alimentation des matériaux polymériques fondus dans les buses d'un faisceau de filage et extrusion des matériaux polymériques fondus à travers les buses,

        a. formation de filaments sans fin à partir des matériaux polymériques fondus sortant des buses,
        b. où le premier matériau polymérique s'étend dans la direction longitudinale des filaments et forme au moins une partie de la surface des filaments, et son point de fusion est d'au moins 5°C inférieur au point de fusion des autres composants des filaments,

    c) refroidissement des filaments ainsi formés par un milieu fluide ayant une température dans la plage de 10 à 90 °C et étirement des filaments dans un rapport d'étirage dans la plage de 200 à 1300 pour obtenir un état cristallin semi-stable d'au moins le deuxième matériau polymérique, et
    d) dépôt des filaments de façon aléatoire sur une courroie de formation pour former une nappe filamentaire non-tissée, et
    e) préconsolidation de la nappe filamentaire non-tissée par flux thermique pendant un temps de 1 à 10000 ms, et
    f) préchauffage de la nappe filamentaire par flux thermique ayant une température de 5 à 20 °C inférieure à la température de fusion du premier matériau polymérique, préférablement à une température de 5 à 15 °C inférieure à la température de fusion du premier matériau polymérique, plus préférablement à une température de 5 à 10 °C inférieure à la température de fusion du premier matériau polymérique, et
    g) consolidation de la nappe filamentaire par flux thermique ayant une température de 5 °C au maximum au-dessous de la température de fusion du premier matériau polymérique et de 3 °C au maximum au-dessus de la température de fusion du premier matériau polymérique, et refroidissement de la nappe filamentaire ainsi consolidée par flux d'air ayant une température dans la plage de 10 à 40 °C, préférablement de 20 à 30 °C.

11. Procédé de production d'un tissu non-tissé selon la revendication 10, où un refroidissement intermédiaire par l'exposition de la nappe préconsolidée à l'air est effectué entre l'étape e) de préconsolidation et l'étape f) de préchauffage.

12. Procédé de production d'un tissu non-tissé selon la revendication 11, où le refroidissement intermédiaire est effectué par l'air ayant une température égale ou inférieure à 70 °C, préférablement égale ou inférieure à 60 °C, plus préférablement égale ou inférieure à 55 °C.

13. Procédé de production d'un tissu non-tissé selon l'une quelconque des revendications 10 à 12, où - pendant la consolidation de la nappe dans l'étape g) - le flux thermique est appliqué à partir des directions alternées de sorte qu'il entre la nappe d'un côté et puis de l'autre côté de la nappe.

14. Procédé de production d'un tissu non-tissé selon l'une quelconque des revendications 10 à 13, où au moins une partie des étapes f) et/ou g) est effectuée en guidant la nappe le long de tambours d'un dispositif de consolidation par passage d'air.

15. Procédé de production d'un tissu non-tissée selon l'une quelconque des revendications 10 à 14, où au moins une partie des étapes f) et/ou g) est effectuée en guidant la nappe à travers un dispositif de consolidation à four plate.

Figure 1

Figure 2

**Figure 3**

**Figure 4**

**Figure 5A**

**Figure 5B**

**Figure 6A**

**Figure 6B**

**Figure 7A**

**Figure 7B**

**Figure 8A**

**Figure 8B**

**Figure 9**

Figure 10

Figure 11

Figure 12

Figure 13

Figure 14

Figure 15

**Figure 16**

Figure 17

**Figure 18**

Figure 19

**Figure 20A**          **Figure 20B**

**Figure 21**

**Figure 22**

**Figure 23**

**Figure 24**

Figure 25

Figure 26

Figure 27

Figure 28

**Figure 29**

**Figure 30**

**Figure 31**

**Figure 32**

SEM HV: 10.00 kV    WD: 42.04 mm                              VEGA\\ TESCAN
SEM MAG: 100 x      Det: SE Detector       500 µm
SEM MAG: 100 x      Date(m/d/y): 09/18/20           Digital Microscopy Imaging

**Figure 33**

**Figure 34**

**Figure 35**

**Figure 36**

**Figure 37**

**Figure 38**

**Figure 39**

**Figure 40**

**Figure 41**

Fig. 42A           Fig. 42B

Figure 43A      Figure 43B      Figure 43C

Figure 44          Figure 45          Figure 46

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018059610 A
- WO 2020103964 A
- WO 2020112705 A
- WO 2020107421 A

- EP 3771556 A1
- EP 19189238
- US 20200170853 A1

**Non-patent literature cited in the description**

- A non-local algorithm for image denoising. **BUADES, ANTONI** ; **BARTOMEU COLL** ; **J-M. MOREL**. Computer Vision and Pattern Recognition, 2005. CVPR 2005. IEEE Computer Society Conference on. IEEE, 2005, vol. 2
- **OTSU, NOBUYUKI**. A threshold selection method from gray-level histograms. *IEEE transactions on systems, man, and cybernetics*, 1979, vol. 9 (1), 62-66

- **NOH, HYEONWOO** ; **SEUNGHOON HONG** ; **BO-HYUNG HAN**. Learning deconvolution network for semantic segmentation. *Proceedings of the IEEE international conference on computer vision.*, 2015
- **MARTIN ABADI** ; **ASHISH AGARWAL** ; **PAUL BARHAM** ; **EUGENE BREVDO** ; **ZHIFENG CHEN** ; **CRAIG CITRO** ; **GREG S. CORRADO** ; **ANDY DAVIS** ; **JEFFREY DEAN** ; **MATTHIEU DEVIN**. *TensorFlow: Large-scale machine learning on heterogeneous systems*, 2015